# EUROPÄISCHE PATENTSCHRIFT

(11) **EP 3 048 936 B1**
(45) Veröffentlichungstag und Bekanntmachung des Hinweises auf die Patenterteilung: **28.06.2017**
(21) Anmeldenummer: 14777559.7
(22) Anmeldetag: 26.09.2014
(51) Int. Cl.: A47J 27/16

(54) **VORRICHTUNG ZUM ZUBEREITEN VON SPEISEN**
DEVICE FOR PREPARING FOOD
DISPOSITIF POUR PRÉPARER LA NOURRITURE

(30) Priorität: 27.09.2013 DE 102013219621; 14.02.2014 DE 102014202702
(43) Veröffentlichungstag der Anmeldung: 03.08.2016
(73) Patentinhaber: Pasta E Sughi Sa, 1211 Geneva (CH)
(72) Erfinder: MEDERER, Herbert, 90768 Fürth (DE)
(74) Vertreter: Rau, Schneck & Hübner Patentanwälte Rechtsanwälte PartGmbB
(86) Internationale Anmeldenummer: PCT/EP2014/070622
(87) Internationale Veröffentlichungsnummer: WO 2015/044347

(56) Entgegenhaltungen:
- WO-A1-02/17760
- WO-A1-2007/017342
- DE-A1-102004 063 278
- GB-A- 191 423 656

## Beschreibung

Die Erfindung betrifft eine Vorrichtung zum Zubereiten von Speisen.

Eine derartige Vorrichtung ist beispielsweise aus der DE 10 2012 202 317 A1 bekannt. Weitere Vorrichtungen sind bekannt aus GB 23,656 A, DE 10 2004 063 278 A1, WO 2007/017342 A1 und WO 02/17760 A1. Vorbereitete Speisen werden einem Speisen-Gefäß angeordnet und mittels einer Kinematik-Einheit entlang einer Verlagerungsbahn verlagert, um ein Vermischen der Speisen, insbesondere Nudeln mit Soße zu ermöglichen. Der anlagentechnische Aufwand für eine derartige Vorrichtung ist groß.

Es ist eine Aufgabe der vorliegenden Erfindung, eine Vorrichtung zum Zubereiten von Speisen derart zu verbessern, dass der apparative Aufbau der Vorrichtung und insbesondere die Zubereitung der Speisen selbst vereinfacht sind.

Diese Aufgabe wird durch eine Vorrichtung mit den in Anspruch 1 angegebenen Merkmalen gelöst. Der Kern der Erfindung besteht darin, dass in einem Speisen-Gefäß befindliche Speisen mittels einer Rühr-/Erwärmungs-Einheit gerührt und erwärmt werden können. Die Rühr-/Erwärmungs-Einheit erfüllt also zwei Funktionen, nämlich Rühren und Erwärmen. Über ein Sondenrohr der Rühr-/Erwärmungs-Einheit, das mit einem Dampferzeuger verbindbar ist, kann erwärmter Dampf dem Gefäß zugeführt werden. Der erwärmte Dampf dient insbesondere zum Erwärmen der Speisen. Das Sondenrohr kann mittels eines Rührantriebs eine Rührbewegung durchführen. Das Sondenrohr dient auch dem Rühren der in dem Gefäß angeordneten Speisen. Eine Rührbewegung kann eine Längsbewegung des Sondenrohrs entlang der Sondenrohr-Längsachse und/oder eine Drehbewegung des Sondenrohrs um die Sondenrohr-Längsachse umfassen. Die Rührbewegung bewirkt eine Relativverlagerung des Sondenrohrs gegenüber dem feststehenden Gefäß. Die Rührbewegung erfolgt insbesondere derart, dass eine Sondenrohr-Längsachse des Sondenrohrs entlang einer Doppel-Kegelfläche geführt verlagert wird. Die Sondenrohr-Längsachse ist insbesondere quer zu einer Gefäß-Halterung, in der das Speisen- Gefäß gehalten ist, angeordnet. Eine Gefäß-Abdeckung ist zum Abdecken des Speisen-Gefäßes vorgesehen. Insbesondere definiert die Gefäß-Halterung eine insbesondere horizontal ausgerichtete Gefäß-Halterungs-Ebene. Dadurch, dass das Sondenrohr einer Rührbewegung folgt, kann das Speisen-Gefäß während der Speisenzubereitung ortsfest in der Vorrichtung angeordnet sein. Insbesondere ist eine Bewegung des Speisen-Gefäßes während der Speisenzubereitung nicht erforderlich. Die Vorrichtung zum Zubereiten von Speisen ist anlagentechnisch unaufwendig ausgeführt. Die Zubereitung von Speisen ist unkompliziert und insbesondere vereinfacht möglich.

Die Vorrichtung weist einen Sondenrohr-Linearantrieb für eine Linearverlagerung des Sondenrohrs entlang der Sondenrohr-Längsachse relativ zu dem Speisen-Gefäß auf. Dadurch ist es möglich, dass das Sondenrohr mit einer vorgegebenen Eintauchtiefe in das Speisen-Gefäß eintaucht. Beispielsweise kann eine Abgabeposition des erwärmten Dampfes in Abhängigkeit des Füllgrades des Speisen-Gefäßes und/oder des Speisentyps gezielt eingestellt werden. Das Sondenrohr kann beispielsweise zum Entnehmen des Speisengefäßes nach oben aus dem Innenraum des Speisengefäßes herausgefahren werden.

Günstig ist eine Vorrichtung, bei der die Rühr-/Erwärmungs-Einheit eine Schwenkaufnahme aufweist, mit der das Sondenrohr schwenkbar an der Gefäß-Abdeckung angelenkt ist. Dadurch ist die Schwenkbarkeit des Sondenrohrs festgelegt. Die Rührbewegung des Rührantriebs ist dadurch definiert. Die Rührbewegung ist insbesondere stabil ausführbar. Die Rührbewegung ist reproduzierbar. Dadurch ist insbesondere eine reproduzierbare Zubereitung der Speisen möglich.

Besonders vorteilhaft ist eine Ausgestaltung, bei der die Schwenkaufnahme einen Rührbewegungs-Fixpunkt aufweist. Der Rührbewegungs-Fixpunkt ist für jede Position des Sondenrohrs identisch. Insbesondere ist der Rührbewegungs-Fixpunkt die Spitze einer virtuellen Kegelfläche. Insbesondere handelt es sich dabei um eine virtuelle Doppel-Kegelfläche, wobei die beiden Kegelflächen derart angeordnet sind, dass die Kegelgrundflächen parallel zueinander und voneinander abgewandt angeordnet sind. Die virtuelle Doppel-Kegelfläche ist im Wesentlichen sanduhrförmig ausgeführt.

Vorteilhaft ist eine Ausführung, bei der der Rührantrieb einen Drehantrieb und ein von dem Drehantrieb angetriebenes Führungs-Element für eine geführte Drehbewegung des Sondenrohres aufweist. Bei einer derartigen Ausführung ist die Rührbewegung des Sondenrohrs effektiv und zuverlässig möglich. Insbesondere ist die Übertragung der für die Rührbewegung erforderlichen Drehbewegung des Sondenrohres robust.

Besonders vorteilhaft ist eine Ausgestaltung, bei der das Führungs-Element eine parallel zu einer Gefäß-Halterungs-Ebene angeordnete Führungs-Scheibe aufweist. Die Führungs-Scheibe weist eine exzentrisch angeordnete Durchtritts-Öffnung auf. Insbesondere weist die Führungs-Scheibe eine kreisförmige Kontur auf. Die Durchtritts-Öffnung ist exzentrisch zu einem Mittelpunkt der Kreiskontur angeordnet.

Besonders vorteilhaft ist eine Ausgestaltung, bei der eine senkrecht zur Sondenrohr-Längsachse orientierte Abstütz-Scheibe zum Abstützen des Sondenrohrs an der Führungs-Scheibe vorgesehen ist. Dadurch kann insbesondere das Eigengewicht des Sondenrohrs abgestützt werden. Dadurch wird insbesondere die Gefäß-Abdeckung vom Eigengewicht des Sondenrohrs entlastet.

Besonders vorteilhaft ist eine Ausgestaltung, bei der das Führungs-Element als Innenring einer Lagerungsverbindung ausgeführt ist. Insbesondere ist die Lagerungsverbindung ein Kugellager, wobei insbesondere die Führungs-Scheibe den Innenring darstellt. Der Innenring kann mit einem Außenring zusammenwirken, der insbesondere zweiteilig entlang einer Längsachse ausgeführt ist. Als Lagerkörper werden insbesondere Kugeln, die insbesondere aus Vergütungsstahl hergestellt sind, verwendet. Der Innenring und/oder der Außenring sind aus Polyetheretherketon (PEEK) hergestellt.

Besonders vorteilhaft ist eine Ausgestaltung, bei der eine Linearverlagerungs-Einheit für eine Linearverlagerung des Führungs-Elements relativ zu der Gefäß-Halterung parallel zur Gefäß-Halterungs-Ebene vorgesehen ist. Dadurch ist eine Entnahme der Speisen, insbesondere des Speisen-Gefäßes vereinfacht.

Vorteilhaft ist eine Ausgestaltung, bei der das Sondenrohr durch die Gefäß-Abdeckung aus dem Gefäß abgedichtet herausgeführt ist. Insbesondere ist das Sondenrohr zentral durch die Gefäß-Abdeckung herausgeführt.

Dadurch ist gewährleistet, dass Wärme über die Sondenrohr-Zuführung aus dem Gefäß-Innenraum nicht unbeabsichtigt abgegeben wird. Gleichzeitig ist das Sondenrohr in dem Speisen-Gefäß und insbesondere an der Gefäß-Abdeckung beweglich, insbesondere gelenkig, angeordnet.

Vorteilhaft ist eine Ausgestaltung, bei der die Gefäß-Abdeckung eine Gefäß-Innenhaube und eine mit der Gefäß-Innenhaube verbundene Gefäß-Außenhaube aufweist. Insbesondere ist die Gefäß-Innenhaube aus Silikon hergestellt. Dadurch ist insbesondere die bewegliche Anlenkung des Sondenrohrs gewährleistet. Die bewegliche Anlenkung des Sondenrohrs, insbesondere über die Schwenkaufnahme an der Gefäß-Abdeckung ist für die Rührbewegung des Sondenrohrs vorteilhaft. Dies wird insbesondere dadurch ermöglicht, dass Silikon flexibel ist und elastische Materialeigenschaften aufweist. Zudem ist Silikon dichtend, so dass eine Abdichtung an der Gefäß-Abdeckung vorteilhaft möglich ist. Insbesondere weist Silikon eine geringe Benetzbarkeit der Oberfläche auf, so dass möglicherweise während der Speisenzubereitung an einer Innenfläche der Gefäß-Abdeckung vorhandene Speisenreste selbsttätig in Folge der Schwerkraft abtropfen. Die geringe Benetzbarkeit der Oberfläche wird auch als Lotuseffekt bezeichnet. Das bedeutet, dass beispielsweise bei einem Öffnen des Speisen-Gefäßes die Gefahr eines Nachtropfens von Speisen von der oben angeordneten Gefäß-Abdeckung reduziert ist. Die Gefäß-Außenhaube ist insbesondere aus Metall und insbesondere aus Edelstahl ausgeführt. Die Gefäß-Außenhaube dient insbesondere zum Stabilisieren der Gefäß-Abdeckung insgesamt. Durch die vorteilhafte Kombination, insbesondere der ausgewählten Materialien für Gefäß-Innenhaube und Gefäß-Außenhaube ist eine flexible, dichtende und gleichzeitig stabile Gefäß-Abdeckung geschaffen.

Besonders vorteilhaft ist eine Ausgestaltung, bei der die Gefäß-Außenhaube formschlüssig mit der Gefäß-Innenhaube rastend verbunden ist. Dadurch ist eine sichere Verbindung zwischen Gefäß-Außenhaube und Gefäß-Innenhaube gewährleistet. Zudem ist eine Trennung der Verbindung - sofern dies aus Reinigungs- und/oder Reparatur-Gründen erforderlich sein sollte - möglich.

Vorteilhaft ist eine Ausgestaltung, bei der die Gefäß-Halterung an eine Aufnahme aufweisende Halterungs-Platte und eine in die Aufnahme einsetzbare Unterschale umfasst, wobei das Speisen-Gefäß in die Unterschale eingesetzt werden kann. Dadurch ist insbesondere ein Reinigungsvorgang der Vorrichtung, der beispielsweise zwischen zwei Speisenzubereitungs-Vorgängen erfolgen kann, vereinfacht möglich. Zudem ist eine erhöhte Sicherheit gewährleistet, falls es während der Speisenzubereitung zu einem unbeabsichtigten Beschädigen des Speisen-Gefäßes kommen sollte. Speisen und/oder erwärmter Dampf kann nicht unbeabsichtigt aus der Vorrichtung treten, da das Speisen-Gefäß von der Unterschale umschlossen ist.

Besonders vorteilhaft ist eine Ausgestaltung mit einer Aushebe-Vorrichtung zum Ausheben des Speisen-Gefäßes aus der Unterschale. Die Aushebe-Vorrichtung ist derart ausgeführt, dass beispielsweise bei einer Linearverlagerung der Gefäß-Halterung nach unten, das Speisen-Gefäß von der Aushebe-Vorrichtung gehalten wird. Die Aushebe-Vorrichtung ist inbesondere derart ausgeführt, dass das darauf angeordnete Speisen-Gefäß aktiv nach oben, also insbesondere entgegen der Linearverlagerung der Gefäß-Halterung, verlagerbar ist. Die Aushebe-Vorrichtung umfasst insbesondere eine rohrförmige Stange mit einem daran befestigten plattenförmigen Teller, der in einem zentralen Bereich, in dem der Teller mit der Stange verbunden ist, eine Öffnung aufweist. Dadurch ist es möglich, über die rohrförmige Stange und die Öffnung Tellerdampf und/oder Wasser in der Unterschale zuzuführen und beispielsweise die Gefäß-Abdeckung von Innen zu reinigen. Dazu ist es besonders vorteilhaft, wenn an der Unterschale einen Ablauf, insbesondere mit einem Siphon, vorgesehen ist. Die Unterschale ist insbesondere derart ausgeführt, dass ein Abfluss an einem tiefsten Punkt der Unterschale angeordnet ist. Der tiefste Punkt der Unterschale ist insbesondere exzentrisch, insbesondere zu dem Mittelpunkt der Halterungs-Platte angeordnet.

Vorteilhaft ist eine Ausgestaltung, bei der das Sondenrohr einen an einem im Speisen-Gefäß anordenbaren Ende einen Düsen-Abschnitt aufweist, in dem mehrere Sondenrohr-Öffnungen vorgesehen sind. Insbesondere ist der Düsen-Abschnitt kugelkalottenförmig ausgeführt. Insbesondere ist eine Sondenrohr-Öffnung zentral am Sondenrohr, also konzentrisch zur Sondenrohr-Längsachse, angeordnet. Darüber hinaus sind weitere Sondenrohr-Öffnungen vorgesehen, die aus mindestens einem und insbesondere aus mindestens zwei Teilkreisen an einem äußeren Umfang des Sondenrohrs angeordnet sind. Dadurch ist es möglich, dass ausreichend Dampf und insbesondere ausreichend verteilt Dampf in das Speisen-Gefäß zugeführt werden kann.

Weitere Merkmale, Vorteile und Einzelheiten der Erfindung ergeben sich aus der nachfolgenden Beschreibung von Ausführungsbeispielen anhand der Zeichnungen. Es zeigen:
- Fig. 1: eine perspektivische Seitenansicht einer Vorrichtung gemäß einem ersten Ausführungsbeispiel,
- Fig. 2: eine Ausschnittsvergrößerung gemäß Schnittlinie II-II in Fig. 1,
- Fig. 3: eine Fig. 2 entsprechende Schnittdarstellung einer Gefäß-Innenhaube einer Gefäß-Abdeckung,
- Fig. 4: eine Ausschnittsvergrößerung eines Querschnitts durch eine Spindelmutter-Platte,
- Fig. 5: eine Ausschnittsvergrößerung eines Querschnitts durch eine Motorplatte,
- Fig. 6: eine Ausschnittsvergrößerung eines weiteren, gegenüber Fig. 5 um 90° gedrehten Querschnitts durch die Motorplatte,
- Fig. 7: eine Fig. 1 ähnliche Darstellung einer Vorrichtung gemäß einem zweiten Ausführungsbeispiel,
- Fig. 8: eine Ausschnittsvergrößerung gemäß Fig. 7,
- Fig. 9: eine Ausschnittsvergrößerung eines Längsschnitts des Spindelantriebes in Fig. 8,
- Fig. 10: ein Fig. 2 entsprechender vergrößerter Detailausschnitt der Vorrichtung gemäß dem zweiten Ausführungsbeispiel,
- Fig. 11: eine Fig. 2 entsprechende Schnittdarstellung einer Gefäß-Halterung einer Vorrichtung gemäß einem dritten Ausführungsbeispiel und
- Fig. 12: eine Fig. 2 entsprechende Schnittdarstellung einer Vorrichtung gemäß einem vierten Ausführungsbeispiel,
- Fig. 13: eine Seitenansicht der Sonde gemäß dem vierten Ausführungsbeispiel in Fig. 12 und
- Fig. 14: eine Draufsicht der Sonde gemäß Fig. 13.

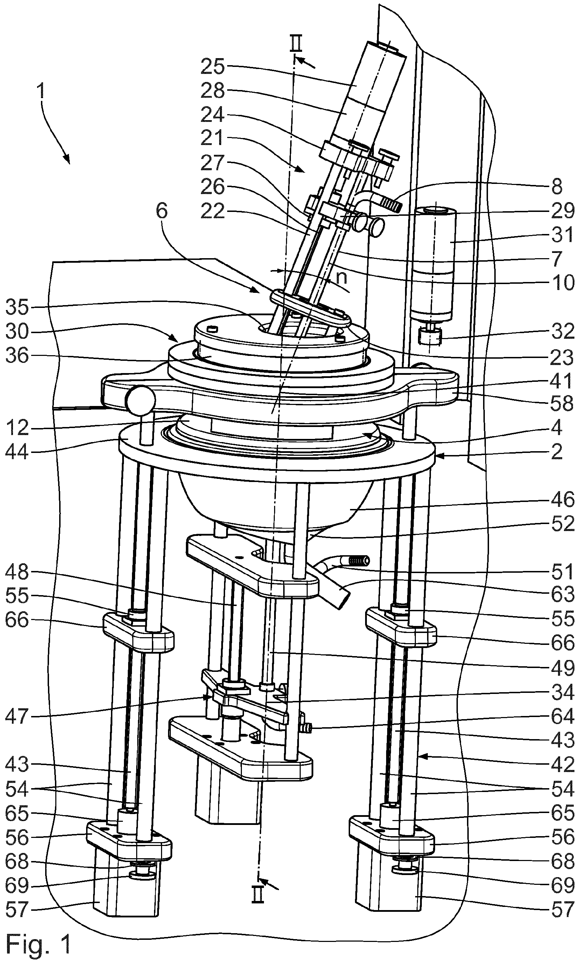

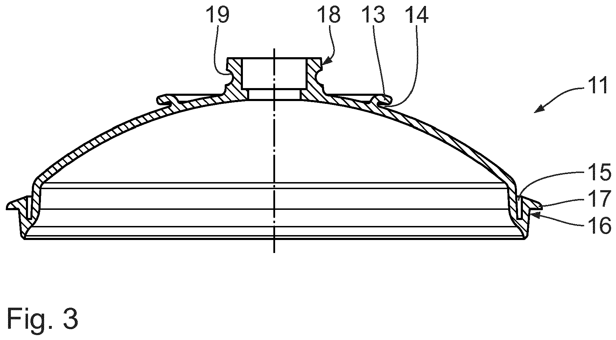

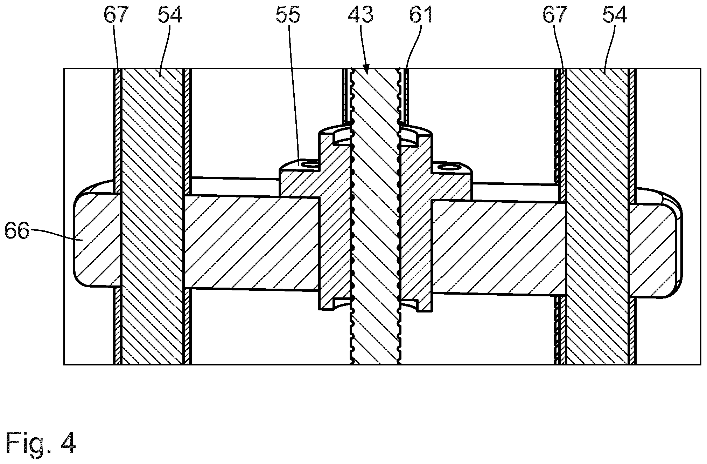

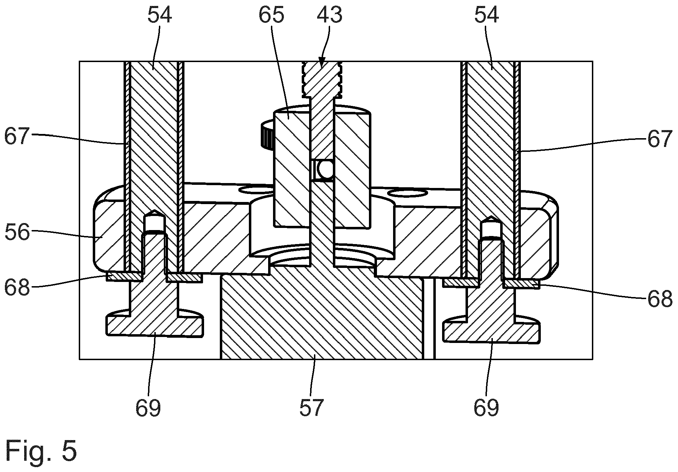

Ein in Fig. 1 bis 6 dargestelltes erstes Ausführungsbeispiel einer Vorrichtung 1 dient zum Zubereiten von Speisen. Die Vorrichtung 1 umfasst eine tischartige Gefäß-Halterung 2 zum Halten eines napfartigen Speisen-Gefäßes 3. Das Speisen-Gefäß 3 kann mittels einer Gefäß-Abdeckung 4 abgedeckt und dicht verschlossen werden. Das Speisen-Gefäß 3 und die Gefäß-Abdeckung 4 umschließen einen Gefäß-Innenraum 5, in dem die Speisen während der Zubereitung angeordnet sind.

Weiterhin umfasst die Vorrichtung 1 eine Rühr-/Erwärmungs-Einheit 6 zum Rühren und Erwärmen der Speisen in dem Speisen-Gefäß 3. Die Rühr-/Erwärmungs-Einheit 6 umfasst ein Sondenrohr 7, das zumindest teilweise innerhalb des Gefäß-Innenraums 5 anordenbar ist. Das Sondenrohr 7 weist einen Dampf-Anschluss 8 auf, über den erwärmter Dampf dem Sondenrohr 7 von einem nicht dargestellten Dampferzeuger zugeführt werden kann. Über mehrere, an dem im Gefäß-Innenraum 5 angeordneten Ende des Sondenrohrs 7 angeordnete Sondenrohr-Öffnungen 9 kann der Dampf an die in dem Gefäß-Innenraum 5 vorhandenen Speisen zum Erwärmen und Rühren abgegeben werden.

Das die Sondenrohr-Öffnungen 9 aufweisenden Ende des Sondenrohrs 7 ist kugelkalottenförmig ausgeführt. Insbesondere beschreibt dieses Ende des Sondenrohrs 7 eine Teilfläche einer Kugeloberfläche, wobei diese Teilfläche größer ist als eine Halbkugelfläche. Insbesondere beträgt ein Öffnungswinkel der Kugeloberfläche um einen Kugelmittelpunkt mehr als 180°, insbesondere mehr als 210°.

Die Sondenrohr-Öffnungen 9 sind an dem Ende des Sondenrohrs 7 entlang von zwei Teilkreisen angeordnet, wobei die Teilkreise jeweils konzentrisch zur Sondenrohr-Längsachse 10 angeordnet sind. Eine weitere Sondenrohr-Öffnung 9 ist konzentrisch zur Sondenrohr-Längsachse an einem unteren Ende des Sondenrohrs 7 angeordnet.

Die Gefäß-Abdeckung 4 umfasst eine Gefäß-Innenhaube 11 aus Silikon und eine mit der Gefäß-Innenhaube 11 verbundene Gefäß-Außenhaube 12 aus Metall, insbesondere aus Edelstahl. Die Gefäß-Außenhaube 12 ist formschlüssig mit der Gefäß-Innenhaube 11 rastend verbunden. Dazu weist die Gefäß-Innenhaube 11 an einem oberen Ende eine ringförmige Wulst 13 auf, die einen Hinterschnitt 14 definiert. In dem von der Wulst 13 gebildeten Hinterschnitt 14 ist die Gefäß-Außenhaube 12 eingesetzt. Damit ist die Gefäß-Außenhaube 12 in radialer Richtung der Gefäß-Abdeckung 4 gehalten. In axialer Richtung der Gefäß-Abdeckung 4 ist eine umlaufende Nut 15 vorgesehen, in die die Gefäß-Außenhaube 12 an der Gefäß-Innenhaube 11 eingesetzt ist. Die Gefäß-Innenhaube 11 weist zudem einen Dichtrand 16 mit einem Überstandsabschnitt 17 auf, mit dem die Gefäß-Abdeckung 4 an der Gefäß-Halterung 2 abdichtend anliegt. Durch Aufsetzen der Gefäß-Abdeckung 4 auf das in der Gefäß-Halterung 2 angeordnete Speisen-Gefäß 3, ist der Gefäß-Innenraum 5 zuverlässig abgedichtet. An einem oberen, dem Speisen-Gefäß 3 abgewandten Ende weist die Gefäß-Innenhaube 11 einen Verbindungs-Aufsatz 18 auf. Der Verbindungs-Aufsatz 18 weist eine kreisringförmige, umlaufende Außen-Nut 19 auf, in die eine Schwenkaufnahme 20 mit einer der Außen-Nut 19 korrespondierenden VerbindungsEinrichtung aufgesetzt werden kann. Die Schwenkaufnahme 20 ist an dem Verbindungs-Aufsatz 18 fest, aber lösbar mit der Gefäß-Innenhaube 11 der Gefäß-Abdeckung 4 verbunden. Dadurch, dass die Gefäß-Innenhaube 11 aus Silikon mit flexiblen, elastischen Materialeigenschaften hergestellt ist, ist eine bewegliche Anlenkung der Schwenkaufnahme 20 an der Gefäß-Abdeckung 4 gewährleistet. Die Schwenkaufnahme 20 weist einen Dicht-Einsatz 73 auf. Der Dicht-Einsatz 73 weist an einem unteren, dem Gefäß-Innenraum 5 zugewandten Ende eine umlaufende Dichtlippe 74 auf. Die Dichtlippe 74 liegt abdichtend an einer äußeren Zylindermantelfläche des Sondenrohrs 7 an. Durch den Dicht-Einsatz 73 mit der Dichtlippe 74 ist das Sondenrohr 7 abgedichtet aus dem Gefäß-Innenraum 5 herausgeführt.

Die Rühr-/Erwärmungseinheit 6 umfasst weiterhin einen Sondenrohr-Linearantrieb 21 für eine Linearverlagerung des Sondenrohrs 7 entlang der Sondenrohr-Längsachse 10 relativ zu dem Speisen-Gefäß 3. Dadurch ist es möglich, dass das Sondenrohr 7 bei auf das Speisen-Gefäß 3 aufgesetzter Gefäß-Abdeckung 4 in das Speisen-Gefäß 3, also in den Gefäß-Innenraum, 5 ein- und wieder ausfahren kann. Der Sondenrohr-Linearantrieb 21 umfasst eine drei Führungsstangen 22 aufweisende Linearführung. Die Stangen 22 sind jeweils in einem 120°-Winkelabstand um die Sondenrohr-Längsachse 10 und jeweils parallel zur Sondenrohr-Längsachse 10 angeordnet. Die Stangen 22 sind mit einem unteren Ende jeweils in der Schwenkaufnahme 20 gehalten. Eine der Stangen 22 ist mit einem oberen Ende in einer Abstütz-Scheibe 23 gehalten. Die beiden anderen Stangen 22 sind durch eine jeweils dafür vorgesehene Öffnung in der Abstütz-Scheibe 23 durch diese hindurch geführt. Diese beiden Stangen 22 weisen eine größere Länge als die in der Abstütz-Scheibe 23 befestigte Stange 22 auf. Die beiden längeren Stangen 22 sind mit ihrem oberen Ende jeweils an einer Motor-Halterung 24 befestigt.

Die Motor-Halterung 24 dient zur Halterung eines Elektromotors 25, der eine Gewindespindel 26 antreibt, die mit einer Spindelnut 27 zusammenwirkt. Der Elektromotor 25 zur Axialverlagerung des Sondenrohrs 7 ist als Schrittmotor oder als Servomotor ausgeführt. Bei einer Drehung des Elektromotors 25 wird eine Abtriebswelle des Elektromotors 25 drehbar angetrieben. Durch die Drehung der Abtriebswelle des Elektromotors 25 wird über ein Getriebe 28 die Gewindespindel 26 gedreht. Die auf die Gewindespindel 26 aufgesetzte Spindelnut 27 wird entlang der Gewindespindel 26 linear verlagert. Die Gewindespindel 26 ist mit einer Sondenrohr-Halterung 29 verbunden. Eine Axialverlagerung der Spindelnut 27 führt zu einer Axialverlagerung der Sondenrohr-Halterung 29 und damit gleichermaßen zu einer Axialverlagerung des Sondenrohrs 7 entlang der Sondenrohr-Längsachse 10.

Weiterhin weist die Vorrichtung 1, insbesondere die Rühr-/Erwärmungs-Einheit 6, einen Rührantrieb 30 auf, um eine Rührbewegung des Sondenrohrs 7 zu ermöglichen. Der Rührantrieb 30 weist einen Drehantrieb 31 auf, der in Form eines Elektromotors mit einem daran angeschlossenen Getriebe ausgeführt ist. Der Elektromotor des Drehantriebs 31 ist als Schrittmotor oder als Servomotor ausgeführt. Mit dem Getriebe des Drehantriebs 31 ist ein Antriebsrad 32 verbunden, das mit einem nicht dargestellten Zahnriemen zusammenwirkt. Mittels des Zahnriemens kann eine Drehbewegung des Drehantriebs 31 auf ein antreibbares Führungs-Element 33 übertragen werden. Das Führungs-Element ist eine eine kreisförmige Außenkontur aufweisende Führungs-Scheibe 33, die konzentrisch zu einer zentralen Längsachse 34 der Vorrichtung angeordnet ist. Die Führungs-Scheibe 33 weist eine Durchtritts-Öffnung 35 auf, die exzentrisch zur Längsachse 34 angeordnet ist.

Der Drehantrieb 31 und das damit verbundene Antriebsrad 32 können mittels eines nicht dargestellten Exzenter-Hebels um eine Exzenterachse schwenkbar verlagerbar sein. Die Exzenterachse ist parallel zur Längsachse 34 und parallel zu einer Längsachse des Drehantriebs 34 und des Antriebsrads 32 angeordnet. Durch Betätigung des Exzenter-Hebels kann der Drehantrieb 31 mit dem daran angeschlossenen Antriebsrad 32 in einer Ebene senkrecht zur Drehantriebslängsachse verlagert werden. Dadurch ist es möglich, einen Abstand zwischen der Längsachse 34 und der Drehantriebslängsachse zu verändern. Dadurch kann der Zahnriemen zur Übertragung der Drehbewegung von dem Drehantrieb 31 auf das Führungs-Element 33 gespannt oder entspannt werden.

Durch die Durchtritts-Öffnung 35 ist das Sondenrohr 7 mit dem Sondenrohr-Linearantrieb 21 hindurchgeführt. Entlang der Sondenrohr-Längsachse 10 ist die Abstütz-Scheibe 23 oberhalb der Führungs-Scheibe 33 angeordnet. Die Schwenkaufnahme 20 ist entlang der Sondenrohr-Längsachse 10 unterhalb der Führungs-Scheibe 33 angeordnet. Die Führungs-Scheibe 33 weist an einer äußeren Zylindermantelfläche ein Drehübertragungselement 36 auf, das mit dem nicht dargestellten Zahnriemen zusammenwirkt, so dass eine Drehbewegung des Drehantriebs 31 auf die Führungs-Scheibe 33 übertragen werden kann. Die Führungs-Scheibe 33 wird über den Drehantrieb 31 drehangetrieben.

In axialer Richtung entlang der Längsachse 34 ist die Führungs-Scheibe 33 zweiteilig ausgeführt. Insbesondere ist die Führungs-Scheibe 33 verschraubt mit einem Innenring 38 einer Lagerungs-Verbindung 37. Der Außenring 39 der Lagerungs-Verbindung 37 ist in axialer Richtung der Längsachse 34 zweigeteilt ausgeführt. Diese zweiteilige Ausführung des Außenrings 39 erleichtert die Montage der Lagerungs-Verbindung 37. Sowohl der Innenring 38 als auch der Außenring 39, insbesondere beide Teile des Außenrings 39 sind aus Kunststoff, insbesondere aus Polyetheretherketon (PEEK), hergestellt. Die Kugeln, die als Lagerungskörper der Lagerungs-Verbindung dienen, sind aus Metall, insbesondere aus Stahl und insbesondere aus Edelstahl, hergestellt. Die Führungs-Scheibe 33 ist senkrecht zur Längsachse 34 orientiert. Durch die Drehung der Führungs-Scheibe 33 folgt die Durchtritts-Öffnung 35 einer konzentrisch zur Längsachse 34 angeordneten Kreisbahn um die Längsachse 34 herum. Diese Kreisbewegung der Durchtritts-Öffnung 35 dient zur geführten Rührbewegung des Sondenrohrs 7 zum Rühren und Erhitzen der Speisen in dem Gefäß-Innenraum 5.

Die Abstütz-Scheibe 23 liegt an einem Kontaktpunkt an einer Oberseite 40 der Führungs-Scheibe 33 auf. Dadurch, dass die Schwenkaufnahme 20 über die kurze Stange 22 direkt an der Abstütz-Scheibe 23 befestigt ist, ist das Eigengewicht des Sondenrohrs 7 und insbesondere des Sondenrohr-Linearantriebs 21 an der Abstütz-Scheibe 23 abgestützt. Dadurch ist die Schwenkaufnahme 20 und insbesondere die Gefäß-Abdeckung 4 mechanisch entlastet.

Bei einer Drehbewegung des Drehantriebs 31 wird die in der Führungs-Scheibe 33 angeordnete Durchtrittsöffnung 35 auf einer Kreisbahn um die Längsachse 34 geführt. Das Sondenrohr 7 ist mit dem Sondenrohr-Linearantrieb 21 gegenüber der Längsachse 34 mit der Sondenrohr-Längsachse 10 mit einem Neigungswinkel n geneigt angeordnet. Infolge der Neigung liegt die Abstütz-Scheibe 23 an dem Kontaktpunkt an der Oberseite 40 der Führungs-Scheibe 33 auf. Infolge der Drehbewegung der Führungs-Scheibe 33 wandert der Kontaktpunkt auf der Oberfläche 40 der Führungs-Scheibe 33. Die Abstütz-Scheibe 23 rollt auf der Oberfläche 40 der Führungs-Scheibe 33 ab. Gleichzeitig ist das Sondenrohr 7 in der Schwenkaufnahme 20 schwenkbar gehalten und an der Gefäß-Abdeckung 4 angelenkt. Das Sondenrohr 7 und insbesondere die Sondenrohr-Längsachse 10 folgt einer Rührbewegung. Die Rührbewegung ist durch eine Rührbewegungs-Hüllfläche beschrieben. Die Rührbewegungs-Hüllfläche ist eine Doppel-Kegelfläche der Sondenrohr-Längsachse 10. Die mit dem von 0 verschiedenen Neigungswinkel n gegenüber der Längsachse 34 geneigt angeordnete Sondenrohr-Längsachse 10 kreist um die Längsachse 34. Der Schnittpunkt der Längsachse 34 und der Sondenrohr-Längsachse 10 ist ein Rührbewegungs-Fixpunkt 41, der für alle Bewegungszustände der Rührbewegung identisch ist. Der Rührbewegungs-Fixpunkt 41 ist jeweils die Spitze der virtuellen Kegelflächen der Doppel-Kegelflächen.

Die Vorrichtung 1 umfasst weiterhin eine Linearverlagerungs-Einheit 42 für die Gefäß-Abdeckung 4. Die Linearverlagerungs-Einheit 42 ermöglicht eine Linearverlagerung der Gefäß-Abdeckung 4 entlang der Längsachse 34. Die Gefäß-Halterung 2 weist eine senkrecht zur Längsachse 34 orientierte Gefäß-Halterungs-Ebene auf. Die Linearverlagerungs-Einheit 42 ermöglicht die Linearverlagerung des Führungs-Elements 33 relativ zu der Gefäß-Halterung 2. Die Linearverlagerungs-Einheit 42 weist zwei parallele Spindelantriebe 43 auf. Die Spindelantriebe 43 sind jeweils als Kugelrollspindelantrieb ausgeführt. Jeder Kugelrollspindelantrieb 43 weist jeweils eine Kugelrollspindel auf, die jeweils durch eine Kugelumlaufmutter 55 geführt ist. Die Spindelantriebe 43 sind durch eine Halterungs-Platte 44 der Gefäß-Halterung 2 geführt und an einer Unterseite einer Platte 58 befestigt. Die Platte 58 ist fest mit dem Rührantrieb 30 und insbesondere mit der Lagerungs-Verbindung 37 verbunden. Die Spindeln der Spindelantriebe 43 sind in der Platte 58 um die Spindellängsachse drehbar gelagert aufgenommen.

Eine Betätigung der Spindelantriebe 43 bewirkt eine Linearverlagerung der Platte 58 entlang der Längsachse 34. Die Spindelantriebe 43 weisen zudem eine Säulenführung auf, die eine geführte Verlagerung der Platte 58 ermöglicht. Die Säulenführungen weisen jeweils zwei Stehbolzen 54 auf. Jeder Stehbolzen 54 weist eine den Stehbolzen 54 einhüllende Hülse 67 auf. Die beiden Stehbolzen 54 sind bezüglich den Kugelrollspindeln der Kugelrollspindelantriebe 43 diametral gegenüberliegend angeordnet. Die Kugelrollspindeln der Kugelrollspindelantriebe 43 sind jeweils durch die Kugelumlaufmuttern 55 geführt. Die Kugelumlaufmuttern 55 sind jeweils in einer Spindelmutter-Platte 66 gehalten und dadurch mit jeweils zwei Stehbolzen 54 verbunden. Die Spindelmutter-Platte 66 ist eine Verbindung zwischen den Kugelrollspindeln der Kugelrollspindelantriebe 43 und den Stehbolzen 54. Die Hülsen 67 sind jeweils zweiteilig ausgeführt und sind jeweils zwischen der Halterungsplatte 44 und der Spindelmutter-Platte 66 einerseits sowie zwischen der Spindelmutter-Platte 66 und der Motorplatte 56 andererseits angeordnet. Die Hülsen 67 liegen jeweils stirnseitig mit einer Ringfläche an der Halterungs-Platte 44, der Spindelmutter-Platte 66 bzw. der Motorplatte 56 an. Die Hülsen 67, die Stehbolzen 54 und die Spindelmutter-Platte 66 sind jeweils ortsfest angeordnet. Die Hülsen 67 sind insbesondere nicht entlang einer Bohrung, durch die die Stehbolzen 54 durch die Spindelmutter-Platte 66 geführt sind, angeordnet. Die Stehbolzen 54 sind direkt in einer entsprechenden Bohrung der Spindelmutter-Platte 66 aufgenommen.

An einem der Platte 58 gegenüberliegend angeordneten Ende des Spindelantriebs 43 weist dieser einen Elektromotor 57 zum Drehantreiben des Spindelantriebs 43 und eine Motorplatte 56, über die der Motor 57 mit der Spindel des Spindelantriebs 43 verbunden ist, auf. Der Motor 57 ist über die Motorplatte 56 mit den Stehbolzen 54 verbunden. Mittels der Motorplatte 56 ist der Motor 57 entlang der Stehbolzen 54 geführt verlagerbar. Die Linearverlagerung der Motorplatte 56 und des Motors 57 entlang der Stehbolzen 54 bewirkt eine Linearverlagerung der Platte 58. Der Motor 57 ist über eine Kupplung 65 mit der Kugelrollspindel des Kugelrollspindelantriebs 43 verbunden. An einer dem Rührantrieb 30 zugewandten Oberseite der Halterungs-Platte 44 ist eine Tischplatte 59 vorgesehen. Die Tischplatte 59 ist insbesondere aus nicht rostendem Edelstahl hergestellt. Die Tischplatte 59 weist eine Plattendicke von 1,5 mm bis 2 mm auf. Die diametral gegenüberliegend angeordneten Stehbolzen 54 dienen einer Verdrehsicherung der Kugelrollspindelantriebe 43. Zusätzlich dienen die Stehbolzen 54 als Gleitführung für die Motorplatte 56. Die Tischplatte 59 ist in Fig. 1 aus Darstellungsgründen nicht dargestellt. Die Motorplatte 56 gleitet auf den Hülsen 67 der Stehbolzen 54. Dazu ist die Motorplatte 56 an einer Unterseite über eine Ringscheibe 68 mit den Stehbolzen 54 mittels Befestigungsschrauben 69 lösbar verbunden, also angeschraubt.

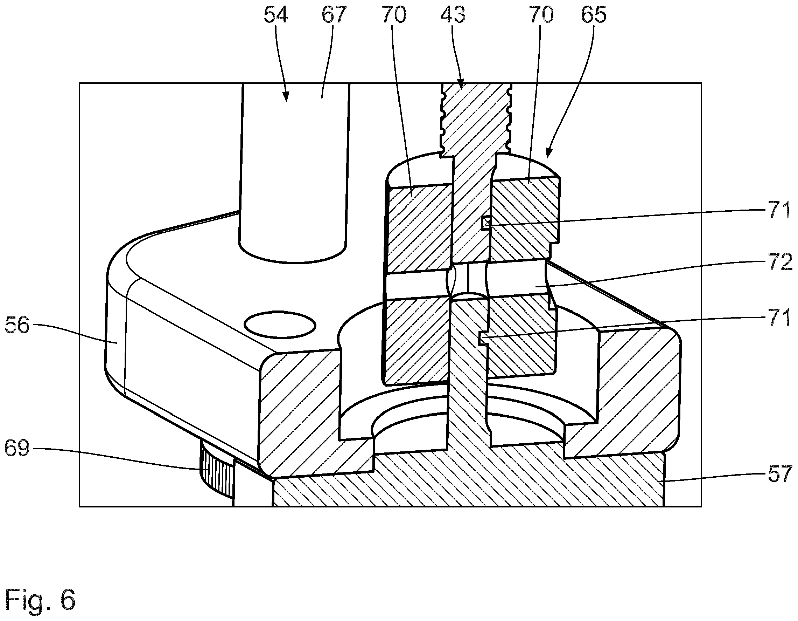

Wie in Fig. 6 gezeigt, ist die Kupplung 65 zweiteilig ausgeführt und weist zwei im Wesentlichen identisch ausgeführte Kupplungs-Halbschalen 70 auf. Die Kupplungs-Halbschalen 70 weisen zwei Hinterschnitt-Elemente 71 auf, die in eine dafür vorgesehene Ausnehmung einer Abtriebswelle des Motors 57 einerseits und der Kugelrollspindel des Kugelrollspindelantriebs 43 andererseits eingreifen. Dadurch ist es möglich, die Antriebsdrehbewegung des Motors 57 auf den Kugelrollspindelantrieb 43 zu übertragen. Durch die zweiteilige Ausführung der Kupplung 65 ist die Montage und insbesondere die Verbindung von Kugelrollspindelantrieb 43 und Motor 57 unter Berücksichtigung der Hinterschnitt-Elemente 71 vereinfacht möglich. Die Kupplungs-Halbschalen 70 sind über fluchtende Querbohrungen 72 durch ein nicht dargestelltes Quer-Verbindungselement, insbesondere eine Verbindungsschraube, miteinander lösbar verbunden. Als Quer-Verbindungselement ist auch ein Bolzen denkbar.

In der Halterungsplatte 44 ist eine Aufnahme 45 vorgesehen, in die eine Unterschale 46 eingesetzt ist. In die Unterschale 46, die insbesondere dauerhaft mit der Halterungsplatte 44 verbunden, insbesondere verschweißt, ist, kann das Speisen-Gefäß 3 eingesetzt werden. An einem oberen, insbesondere ringförmig ausgeführten, Rand der Aufnahme 45 ist eine 1 mmdicke Silikon-Ringdichtung 60 aufgelegt, die entlang der Längsachse 34 etwa 0,1 mm an der Halterungs-Platte 44 übersteht. Auf die Silikon-Ringdichtung 60 ist die Tischplatte 59 aufgelegt. Die Tischplatte 59 dient als Arbeitsplatte. Die Silikon-Ringdichtung 60 steht bezogen auf die Längsachse 34 an der Aufnahme 45 radial über und liegt an einer Oberseite der Halterungs-Platte 44 auf. Die Silikon-Ringdichtung 60 weist einen Innendurchmesser auf, der kleiner ist als die Aufnahme 45 der Halterungs-Platte 44. Der Innendurchmesser der Silikon-Ringdichtung 60 ist insbesondere kleiner als ein nominaler Außen-Durchmesser des Speisen-Gefäßes 3. Beim Einsetzen des Speisen-Gefäßes 3 in die Aufnahme 45 bewirkt die Silikon-Ringdichtung 60, dass das Speisen-Gefäß 3 bezogen auf die Längsachse 34 konzentrisch ausgerichtet wird und das Speisen-Gefäß 3 mittig und damit stabil an der Aufnahme 45 der Halterungs-Platte 44 gehalten ist. Darüber hinaus wird die Silikon-Ringdichtung 60 beim Aufsetzen des Speisen-Gefäßes sowie beim Schließen des Speisen-Gefäßes 3 durch die Abdeckung 4 in die Aufnahme 45 elastisch gebogen. Das Speisen-Gefäß 3 ist zusätzlich in der Aufnahme 45 abgedichtet.

Die Platte 58 ist durch zwei im Wesentlichen identisch ausgeführte Halbplatten ausgeführt, die miteinander verschraubt sind. Die Halbplatten werden auch als Halbschalen bezeichnet. Dadurch ist eine Montage und Demontage der Platte 58 und insbesondere eine Zugänglichkeit zu der Schwenkaufnahme 20 und dem Rührantrieb 30 vereinfacht.

Die Linearverlagerungs-Einheit 42 ermöglicht einen maximalen Hub entlang der Längsachse 34 von bis zu 100 mm. Dadurch ist eine Zugänglichkeit und ein erforderliches Öffnen des Speisen-Gefäßes 3 durch Abheben der Gefäß-Abdeckung 4 von dem Speisen-Gefäß 3 zuverlässig und bequem möglich.

Die Kugelrollspindeln der Kugelrollspindelantriebe 43 weisen jeweils eine Schutzhülse 61 auf und sind mittels Silikon-Dichtungen 62 durch die Tischplatte und die Halterungs-Platte 44 hindurchgeführt. Dadurch ist verhindert, dass Wasser, insbesondere Reinigungswasser, durch einen Spalt zwischen der Schutzhülse 61 um die Kugelrollspindel des Kugelrollspindelantriebs 43 und der Tischplatte 59 infolge der Schwerkraft nach unten durch die Tischplatte 59 und die Halterungs-Platte 44 durchlaufen kann. Dadurch ist gewährleistet, dass eine Reinigung der Tischplatte 59 vereinfacht möglich ist. Zusätzlich wird vermieden, dass Feuchtigkeit in die Öffnungen, durch welche die Spindeln geführt sind, eindringen kann.

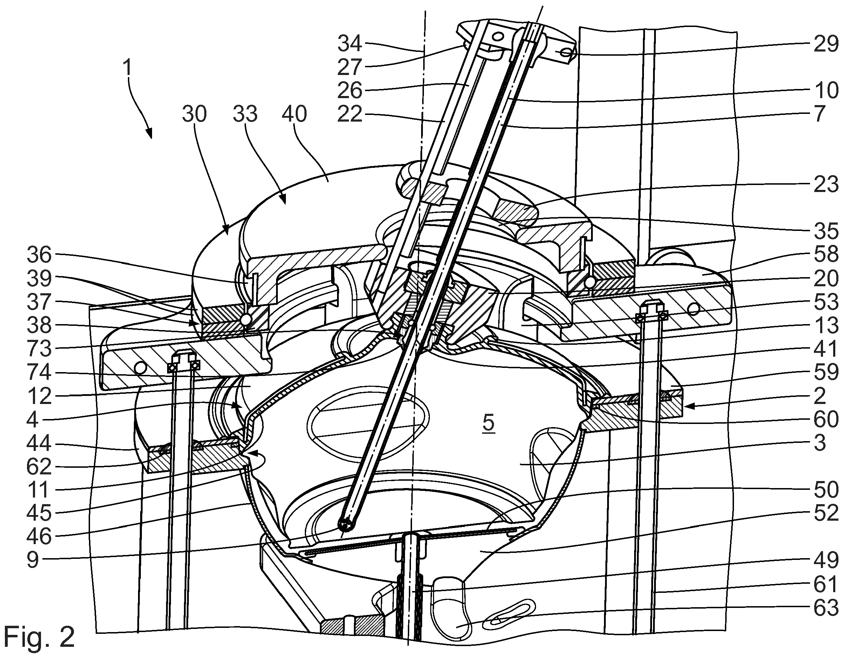

Die Platte 58 ist ringförmig ausgeführt und weist eine bezogen auf die Längsachse 34 zentral angeordnete Öffnung auf. Entlang der Längsachse 34 ist an der Öffnung ein Schulterabsatz vorgesehen. An dem Schulterabsatz, der um die Längsachse 34 umlaufend ausgeführt ist, sind zwei Halteschalen 53 vorgesehen, wovon in Fig. 2 lediglich eine Halteschale 53 dargestellt ist. Die Halteschalen 53 weisen bezogen auf die Längsachse 34 eine Ringsegmentstruktur auf. In einer Ebene parallel zur Längsachse 34 weist die Halteschale 53 eine Ausnehmung auf, mit der die Halteschale 53 in die Anlageschulter der Öffnung der Platte 58 eingesetzt und somit axial entlang der Längsachse 34 an der Platte 58 gehalten ist. Die Halteschalen 53 sind insbesondere mit der Gefäß-Außenhaube 12 verbunden, insbesondere an der Gefäß-Außenhaube 12 angeschraubt. Dadurch ist die Platte 58 über die Halteschalen 53 mit der Gefäß-Abdeckung 4 verbunden. Eine Verlagerung der Platte 58 entlang der Längsachse 34 bewirkt eine Verlagerung der Gefäß-Abdeckung 4 entlang der Längsachse 34. Die Halteschalen 53 sind aus Kunststoff, insbesondere aus Polyetheretherketon (PEEK), hergestellt.

In der Unterschale 46 ist eine Aushebe-Vorrichtung 47 vorgesehen. Die Aushebe-Vorrichtung 47 dient zum Ausheben des Speisen-Gefäßes 3 aus der Unterschale 46. Die Aushebe-Vorrichtung 47 weist einen Spindelantrieb 48 auf, der eine Linearverlagerung entlang der Längsachse 34 bewirkt. Die Aushebe-Vorrichtung ist an sich an einer Unterseite der Halterungs-Platte 44 befestigt. Bei einer Öffnungsbewegung des Speisen-Gefäßes 3, in dem die Halterungs-Platte 44 entlang der Längsachse 34 nach unten verlagert wird, wird gleichzeitig die Aushebe-Vorrichtung 47 gemeinsam mit der Halterungs-Platte 44 verlagert. Durch Aktivieren der Aushebe-Vorrichtung 47, also durch Betätigen des Spindelantriebs 48 wird eine Aushebe-Stange 49 und ein damit verbundener Aushebe-Teller 50 entlang der Längsachse 34 nach oben verlagert. Sowohl die Aushebe-Stange 49 als auch der Aushebe-Teller 50 sind jeweils hohl ausgeführt und an einem unteren Ende mit einem Dampf-/Wasseranschluss 64 verbunden. An dem Aushebe-Teller 50, der eine kreisförmige Kontur aufweist, kann eine äußere, umlaufende, nicht dargestellte Silikon-Dichtung vorgesehen sein, um einen äußeren Randbereich der Aushebe-Vorrichtung 47 gegenüber dem Unterschalen-Boden 52 abzudichten. Dadurch ist gewährleistet, dass beispielsweise während einer Hygiene-Bedampfung über die Sonde 9 Speisereste, die aus der Unterschale 46 gereinigt werden, in den Schlauchabschluss 51 gelangen. Dadurch ist verhindert, dass der Schlauchanschluss 51 und eine daran angeschlossene Druckentlastungsleitung verschmutzt werden. Das bedeutet, dass über die Aushebe-Vorrichtung 47 eine Reinigung des Gefäß-Innenraums 5, insbesondere einer Innenseite der Gefäß-Abdeckung 4 möglich ist. Insbesondere dann, wenn kein Speisen-Gefäß 3 in die Unterschale 46 eingesetzt ist, kann eine derartige Reinigung erfolgen. Dazu weist die Unterschale 46 einen Unterschalen-Boden 52 auf, der einen tiefsten Punkt umfasst, an dem ein Abfluss 63 angeordnet ist. Über den Abfluss 63 kann Schmutzwasser entweichen. Der Abfluss 63 ist exzentrisch zur Längsachse 34 angeordnet.

An dem Abfluss 63 ist ein Schlauchanschluss 51 vorgesehen, der zur Abführung von Überdruck aus dem Gefäß-Innenraum 5 dient.

Im Nachfolgenden wir die Funktionsweise der erfindungsgemäßen Vorrichtung 1 anhand eines Programmablaufs zur Zubereitung von Speisen näher erläutert. Das mit zuzubereitenden Speisen gefüllte Speisen-Gefäß 3 wird manuell oder automatisch auf den Aushebe-Teller 50 der Aushebe-Vorrichtung aufgesetzt. Anschließend fährt die Aushebe-Vorrichtung 47 mit dem Speisen-Gefäß 3 entlang der Längsachse 34 nach unten, bis das Speisen-Gefäß 3 in der Aufnahme 45 der ortsfesten Halterungs-Platte 44 der Gefäß-Halterung 2 anliegt. Dazu ist in der Aufnahme 45 eine Kreisringdichtung 60 aus Silikon vorgesehen, die eine abdichtende und insbesondere selbstzentrierende Anordnung des Speisen-Gefäßes 3 in der Gefäß-Halterung vereinfacht. Gleichzeitig mit dem Absenken der Aushebe-Vorrichtung 47 wird die Gefäß-Abdeckung 4 auf das Speisen-Gefäß 3 aufgesetzt. Gleichzeitig fährt das Sondenrohr 7, dass gegenüber der Längsachse 34 geneigt angeordnet ist, ohne Dampf in den Gefäß-Innenraum 3 soweit ein, bis ein unteres Ende des Sondenrohrs 7 eine Oberfläche der zuzubereitenden Speisen etwa berührt. Erst dann, wenn das Sondenrohr 7 mit den Sondenrohr-Öffnungen 9 in die zuzubereitenden Speisen, insbesondere in Nudeln, eingetaucht ist, erfolgt eine Dampfzufuhr. Eine derartige Vorgehensweise ist besonders zeiteffizient und ermöglicht eine Einsparung des benötigten Dampfvolumens. Während eines Rühr-/Erwärmungs-Zyklus wird Dampf über das Sondenrohr 7 durch die Sondenrohr-Öffnungen 9 den Speisen zugesetzt. Diese Dampfzuführung wird überlagert von der Rührbewegung des Sondenrohrs 7 um den Rührbewegungs-Fixpunkt 41. Der Rühr-/Erwärmungs-Zyklus dauert etwa 10 s bis 15 s. Innerhalb dieses Zeitraums wird eine Zieltemperatur der Speisen von etwa 80°C, insbesondere von etwa 82°C erzielt.

Nach der Speisenzubereitung wird zunächst das Sondenrohr 7 aus dem Gefäß-Innenraum 5 ausgefahren mittels des Sondenrohr-Linearantriebs 21. Während des Ausfahrens folgt das Sondenrohr 7 der Rührbewegung um den Rührbewegungs-Fixpunkt 41. Sobald das Sondenrohr 7 mit den Sondenrohr-Öffnungen 9 aus den zubereiteten Speisen austaucht, wird die Dampfzufuhr abgeschalten. An dem Sondenrohr 7 haftende Speisen und/oder Soße werden an der Dichtlippe 74 beim Verlagern des Sondenrohrs 7 aus dem Gefäß-Innenraum 5 abgestreift. Kurz bevor das Sondenrohr 7 eine obere Endstellung erreicht, erfolgt eine kurze, stoßartige Dampfzufuhr über die Sondenrohr-Öffnungen 9. In der Endstellung ist das Sondenrohr 7 entlang der Sondenrohr-Längsachse 10 soweit aus dem Gefäß-Innenraum 5 herausgefahren, dass im Wesentlichen ausschließlich der Bereich mit den Sondenrohr-Öffnungen 9 innerhalb des Gefäß-Innenraums 5 angeordnet ist. In jedem Fall sind die Sondenrohr-Öffnungen 9 innerhalb des Gefäß-Innenraums angeordnet. Durch diese kurze stoßartige Dampfzuführung, die durch die Rührbewegung des Sondenrohrs 7 überlagert ist, werden Speisereste, insbesondere Soßenreste, die an einer Innenseite der Gefäß-Abdeckung 4, also an der Gefäß-Innenhaube 11, haften, entfernt. Dadurch, dass das Sondenrohr 7 mit der Sondenrohr-Längsachse 10 gegenüber der Längsachse 34 geneigt angeordnet ist, und dadurch, dass mehrere Sondenrohr-Öffnungen 9 im Wesentlichen radial zur Sondenrohr-Längsachse 10 angeordnet sind, ist eine teilweise Rührbewegung um den Rührbewegungs-Fixpunkt 41 des Sondenrohrs ausreichend, um Speisereste von der Gefäß-Innenhaube 11 zu entfernen. Insbesondere ist ein Drehwinkel um den Rührbewegungs-Fixpunkt 41 von höchstens 180°, insbesondere von höchstens 135°, insbesondere von höchstens 90° und insbesondere von höchstens 45° ausreichend. Insbesondere erfolgt die Sondenrohr-Rührbewegung zeitabhängig. Ein für die Sondenrohr-Rührbewegung vorgegebener Zeitbereich ist derart gewählt, dass ein Drehwinkel beispielsweise 380° betragen kann. Insbesondere umfasst ein Drehwinkel mehr als 360°. Die Rührbewegung mit dem Injizieren des Dampfes gilt insbesondere dann als abgeschlossen, wenn die vorgesehene Dampfmenge in das Gefäß zugeführt und die Haube gespült worden ist. Dadurch kann die Temperaturverteilung, Nudel- und Saucendurchmischung und die Haubenspülung verbessert werden.

Dadurch, dass Speisereste von der Gefäß-Innenhaube 11 entfernt werden, wird ein Nachtropfen der Speisereste nach einem Öffnen des Speisen-Gefäßes 3 verhindert. Insbesondere Soßenreste werden in das Speisen-Gefäß 3 getrieben, so dass keine Verluste der Soße bei der Speisenzubereitung auftreten. Darüber hinaus ist das Erscheinungsbild der zubereiteten Speisen in dem Speisengefäß 3 ansprechend. Insbesondere ist ein oberer Rand des Speisen-Gefäßes 3 unverschmutzt. Die damit zu bereiteten Speisen können in einer appetitlichen Weise serviert werden. Eine Nachbereitung, insbesondere eine nachträgliche Säuberung des Speisen-Gefäßes 3, ist nicht erforderlich.

Es ist zusätzlich oder alternativ möglich, eine Dampfzufuhr durch die Sondenrohr-Öffnungen 9 des Sondenrohrs 7 durchzuführen, wenn das Sondenrohr 7 in einer vollständig ausgefahrenen Position ist. In dieser vollständig ausgefahrenen Position befindet sich das Sondenrohr 7 mit den Sondenrohr-Öffnungen 9 oberhalb der Dichtlippe 74. Das bedeutet, dass das Sondenrohr 7 mit den Sondenrohr-Öffnungen 9 außerhalb des Gefäß-Innenraums 5 angeordnet ist. In dieser Position kann eine Dampfzufuhr dazu genutzt werden, um die mechanischen Komponenten, insbesondere innerhalb der Schwenkaufnahme 20, zu reinigen.

Anschließend oder gleichzeitig wird die Gefäß-Abdeckung 4 von dem Speisen-Gefäß 3 abgehoben. Dazu wird die Platte 58 über die Kugelrollspindelantriebe 43 entlang der Längsachse 34 axial verlagert. Die Gefäß-Abdeckung 4 ist über die Halteschalen 53 an der Platte 58 gehalten. Die Halterungs-Platte 44 mit der daran befestigten Unterschale 46 ist fest mit einem nicht dargestellten Maschinengestell verbunden. Die lineare Verlagerungsbewegung der Kugelrollspindelantriebe 43 ist im Wesentlichen dadurch begrenzt, wenn der Motor 57 mit der Motorplatte 56 benachbart zu der ortsfesten Spindelmutter-Platte 66 angeordnet ist. Entsprechend sind die Stehbolzen 54 mit den daran über die Spindelmutter-Platte 66 befestigten Kugelumlaufmuttern 55 maschinenfest und insbesondere nicht beweglich angeordnet. Anschließend wird das Speisen-Gefäß 3 mit den darin zubereiteten Speisen mittels der Aushebe-Vorrichtung 47 aus der Unterschale 46 ausgehoben. Das Speisen-Gefäß 3 kann anschließend manuell oder automatisch entnommen werden.

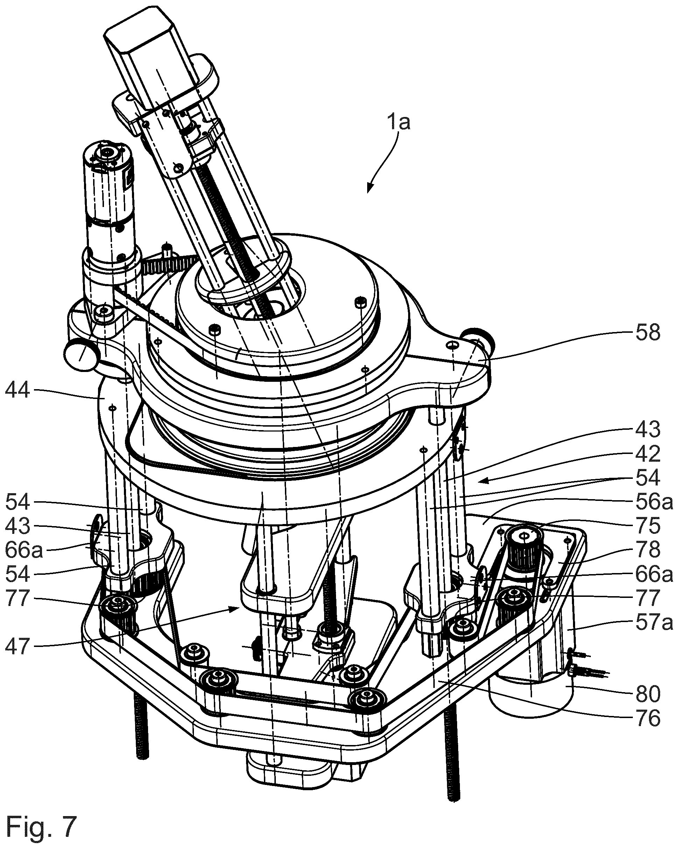

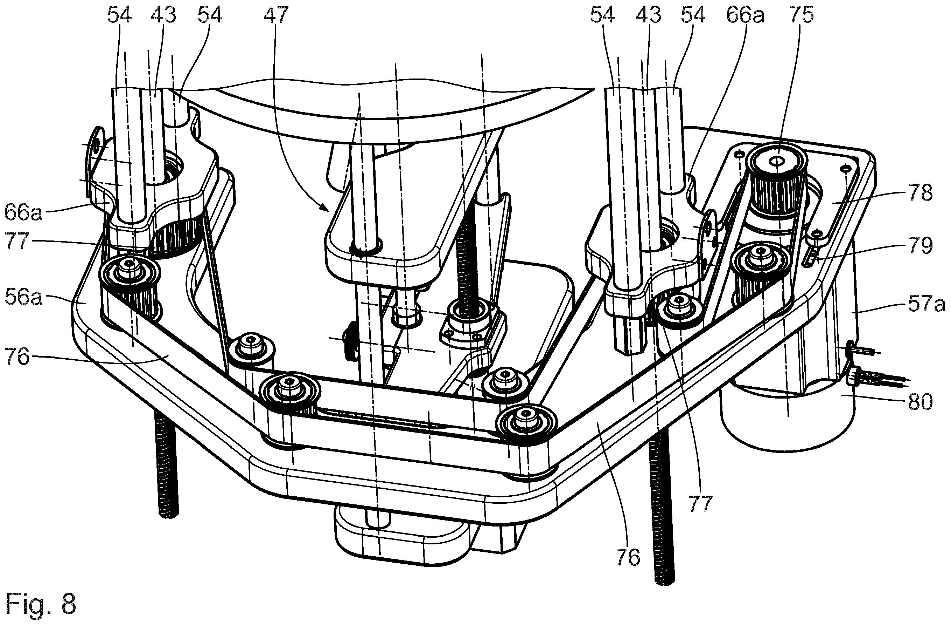

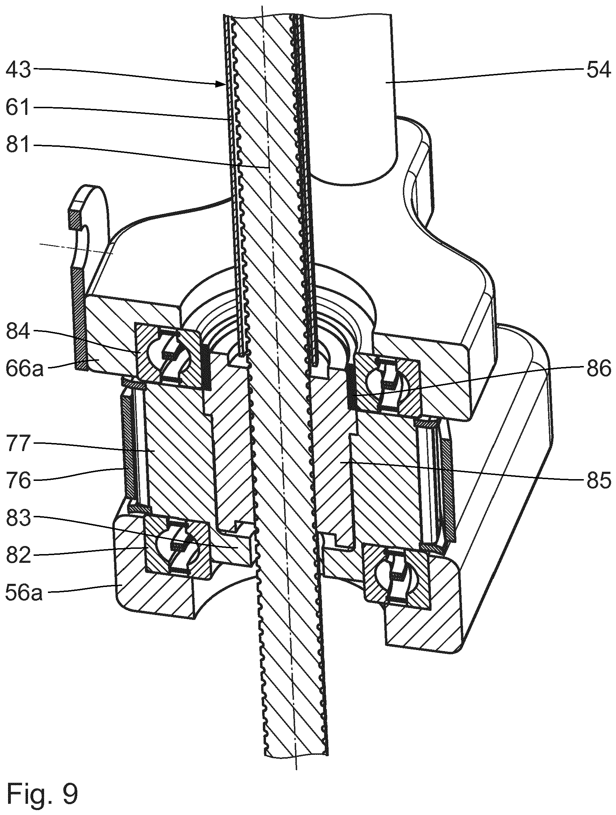

Im Folgenden wird unter Bezugnahme auf die Fig. 7 bis 10 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied gegenüber dem ersten Ausführungsbeispiel besteht darin, dass die Vorrichtung 1a nur einen einzigen Motor 57a aufweist, der zum Antreiben der Spindelantriebe 43 des Gefäß-Halterungs-Linearantriebs 42 dient. Der Motor 57a ist an einer Unterseite der Motorplatte 56a befestigt. Die Motorplatte 56a ist im Wesentlichen U-förmig ausgeführt. Der Abtrieb des Motors 57a ragt durch die Motorplatte 56a hindurch. An dem Abtrieb des Motors 57a ist ein Abtriebselement 75 in Form einer Zahnrolle vorgesehen. Die Zahnrolle wirkt mit einem Zahnriemen als Kraftübertragungselement 76 zur Kraftübertragung bzw. zur Drehmomentübertragung des Motors 57a zusammen.

An einer der Unterseite gegenüberliegenden Oberseite der Motorplatte 56a sind die Stehbolzen 54 des Gefäß-Halterungs-Linearantriebs 42 befestigt. Die beiden Spindelantriebe 43 weisen jeweils ein Spindelantriebselement 77 in Form einer Spindelantriebsrolle auf. Die Spindelantriebsrolle ist entsprechend dem Abtriebselement 75 und dem Kraftübertragungselement 76 mit einer Verzahnung vorgesehen. Dadurch wird das von dem Motor 57a zur Verfügung gestellte Drehmoment von dem Abtriebselement 75 über das Kraftübertragungselement 76 auf die beiden Spindelantriebselemente 77 der Spindelantriebe 43 übertragen. Die Spindelantriebselemente 77 sind jeweils auf der Oberseite der Motorplatte 56a angeordnet. Die Spindelantriebselemente 77 sind jeweils zwischen der Motorplatte 56a und der Spindelmutter-Platte 66a der Spindelantriebe 43 angeordnet.

Das Kraftübertragungselement 76 ist mittels mehrerer Führungs-/Umlenkrollen geführt, um die Übertragung des Drehmoments von dem Abtriebselement 75 auf die Spindelantriebselemente 77 zu gewährleisten. Eine von dem Kraftübertragungselement 76 geschlossene Kontur entspricht im Wesentlichen der U-förmigen Kontur der Motorplatte 56a. Die Spindelantriebselemente 77 sind auf ein und derselben Motorplatte 56a angeordnet. Die U-förmige Ausführung der Motorplatte 56a ermöglicht, dass zwischen den Spindelantrieben 43 die Aushebe-Vorrichtung 47, insbesondere mittig, angeordnet sein kann.

Der Motor 57a ist mittels einer an der Motorplatte 56a veränderlich befestigbaren Motorhalte-Platte 78 gehalten. Dazu sind in der Motorplatte 56a Längsführungen 79 in Form von Durchgangsnuten vorgesehen. Entlang der Längsführungen 79 kann die Motorhalte-Platte 78 veränderlich befestigt werden. Die Längsführungen 79 geben eine Verlagerungsrichtung für die Befestigung des Motors 57a relativ zu der Motorplatte 56a vor. Bezüglich der Verlagerungsrichtung der Längsführungen 79 ist das Abtriebselement 75 fest mit dem Motor 57a verbunden. Eine Verlagerung des Motors 57a bedeutet somit gleichzeitig eine Verlagerung des Abtriebselements 75. Durch eine Verlagerung des Abtriebselements 75 kann das Kraftübertragungselement 76 gespannt und entspannt werden, beispielsweise um Reparatur- und/oder Wartungsarbeiten, insbesondere am Kraftübertragungselement 76, durchzuführen.

Direkt mit dem Motor 57a ist eine Bremse 80 verbunden, um die Drehbewegung des Motors 57a abzubremsen.

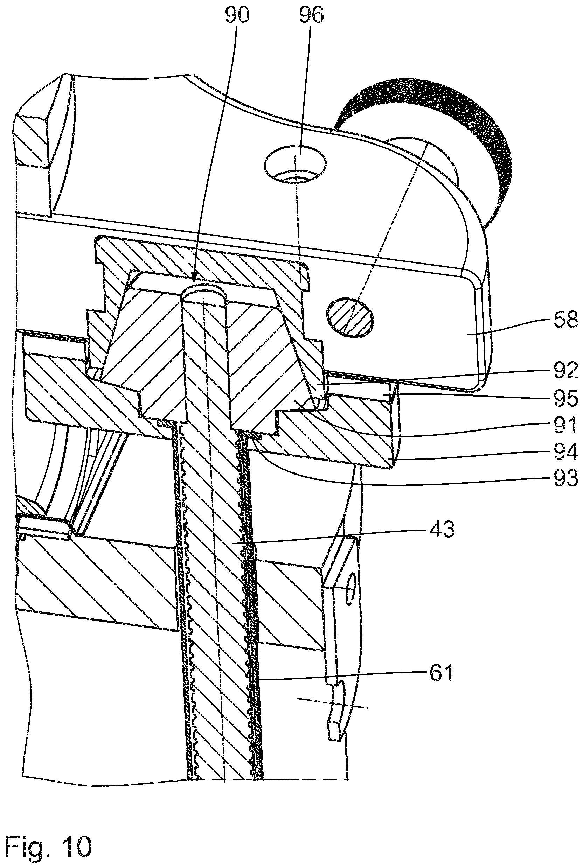

Ein weiterer wesentlicher Unterschied der Vorrichtung 1a gegenüber dem ersten Ausführungsbeispiel besteht darin, dass die Kugelrollspindeln der Spindelantriebe 43 drehfest um die Spindellängsachse 81 und spannbar gelagert sind. Zur drehfesten Anordnung der Spindel der Spindelantriebe 43 sind die Spindeln in der Platte 58 drehfest gehalten. Eine derartige Halterung kann beispielsweise mittels einer Spannzange 90 nach DIN 6343 erfolgen. Eine derartige Spannzange 90 wird auch als Rubber-Flex-Spannzange bezeichnet. Die Spannzange 90 ist in Fig. 10 schematisch dargestellt. Die Spannzange 90 umfasst einen kegelstumpfförmigen Aufsatz 91, der auf die Spindel des Spindelantriebs 43 aufgesetzt ist. Der Aufsatz 91 ist mit einer unteren Stirnfläche an einer flanschartigen Ring-Stirnfläche 93 der Schutzhülse 61 axial abgestützt. Der kegelstumpfförmige Aufsatz 91 wirkt mit einer entsprechend geformten Kegelhülse 92 zusammen, um ein axiales Verspannen der Kugelrollspindel an der Platte 58 zu ermöglichen. Dazu ist der Aufsatz 91 zumindest abschnittsweise in einer unteren Platte 94 aufgenommen und darin gehalten. Zwischen der unteren Platte 94 und Platte 58 ist eine Silikonscheibe 95 angeordnet. Zum Spannen jeweils eines Spindelantriebs 43 in der Platte 58 werden vier nicht dargestellte Spannschrauben in jeweils eine dafür vorgesehene, nicht dargestellte Bohrung eingeschraubt. Die Bohrungen erstrecken sich von einer Unterseite der unteren Platte 94 durch die Platte 94, die Silikonscheibe 95 in die Platte 58. Die Bohrungen sind als Gewindesacklöcher gemäß dem gezeigten Ausführungsbeispiel als metrisches Gewinde M4 ausgeführt. Je nach Größe des Spindelantriebs und/oder der Spannzange 90 können mehr oder weniger als vier Befestigungsschrauben verwendet werden. Entsprechend kann die Größe des Gewindes variieren. Die Befestigungsschrauben sind als Zylinderkopfschrauben ausgeführt. In der Platte 58 ist eine Bohrung vorgesehen. Über die untere Platte 94 ist die Schutzhülse 61 und insbesondere die Spannzange 90 über den Aufsatz 91 axial an der Platte 58 gehalten. Durch das Spannen wird die Silikonscheibe komprimiert. Der zwischen den Platten 58 und 94 resultierende Spalt wird durch die Silikonscheibe 95 abgedichtet. Dadurch ist verhindert, dass sich Ablagerungen zwischen den Platten 58 und 94 bilden. Insbesondere sind die Schutzhülsen 61 sicher und insbesondere wackelfrei, an der unteren Platte 94 gehalten. Die untere Platte 94 dient als Spannscheibe. Die Schutzhülse 61 kann insbesondere als Längenmaß für eine Referenzfahrt vor einer ersten Inbetriebnahme der Vorrichtung 1a dienen.

Dazu ist in die Motorplatte 56a eine erste Lagerungsvorrichtung 82 in Form eines Kugelrollenlagers integriert, das eine drehbare Lagerung des Spindelantriebselements 77 gegenüber der Motorplatte 56a ermöglicht. Die erste Lagerungsvorrichtung 82 ist in radialer Richtung bezogen auf die Spindellängsachse 81 zwischen der Motorplatte 56a und einem Zapfenabschnitt 83 des Spindelantriebselements 77 angeordnet. In das Spindelantriebselement 77 ist ein Einsatz 85 eingesetzt. Der Einsatz 85 ist in das Spindelantriebselement 77 eingeschraubt. Der Einsatz 85 stellt eine Spindelkugelrollmutter dar. Eine Antriebsbewegung des Kraftübertragungselements 76 auf das Spindelantriebselement 77 bewirkt also unmittelbar eine Drehbewegung der Spindelkugelrollmutter 85. Mit der Spindelkugelrollmutter 85 wirkt der Spindelantrieb 43 unmittelbar zusammen. Durch die Drehbewegung der Spindelkugelrollmutter 85 wird die Spindel axial nach oben bzw. nach unten verlagert.

Eine zweite Lagerungsvorrichtung 84, die als Kugelrollenlager ausgeführt ist und die insbesondere identisch zu der ersten Lagerungsvorrichtung 82 ausgeführt ist, dient zur drehbaren Lagerung des Einsatzes 85 um die Spindellängsachse 81.

Der Einsatz 85 ragt zumindest abschnittsweise entlang der Spindellängsachse 81 in das Spindelantriebselement 77 hinein. An einem oberen, der Spindelmutter-Platte 66a zugewandten Ende weist der Einsatz 85 eine Ringmanschette 86 auf. Die Ringmanschette 86 ist zwischen der zweiten Lagerungsvorrichtung 84 und dem Einsatz 85 angeordnet. Die zweite Lagerungsvorrichtung 84 dient zur drehbaren Lagerung des Einsatzes 85 an der Spindelmutter-Platte 66a.

Eine mittels der Lagerungsvorrichtungen 82, 84 verdrehbare Lagerung der Spindeln des Spindelantriebs 43 ermöglicht eine unkomplizierte Handhabung des Antriebs beider Spindeln mit nur einem Motor 57a. Insbesondere ist dadurch gewährleistet, dass die Kugelrollspindeln der Spindelantriebe 43 lediglich einmal, insbesondere vor der Inbetriebnahme der Anlage 1a eingestellt und ausgerichtet werden müssen. Ein zuverlässiges Schließen und Abdichten der Anlage 1a ist auch bei dieser vereinfachten Antriebsvariante gewährleistet. Dadurch, dass nur ein einziger Motor 57a zum Antrieb der Kugelrollspindeln erforderlich ist, ist der apparative Aufwand verringert. Insbesondere ist der steuerungstechnische Aufwand reduziert. Dadurch, dass beide Spindeln von einem Motor 57a und ein gemeinsames Spindelantriebselement 77 angetrieben werden, ist ein gleichzeitiges, insbesondere synchrones Schließen mittels des Gefäß-Halterungs-Linearantriebs 42 gewährleistet.

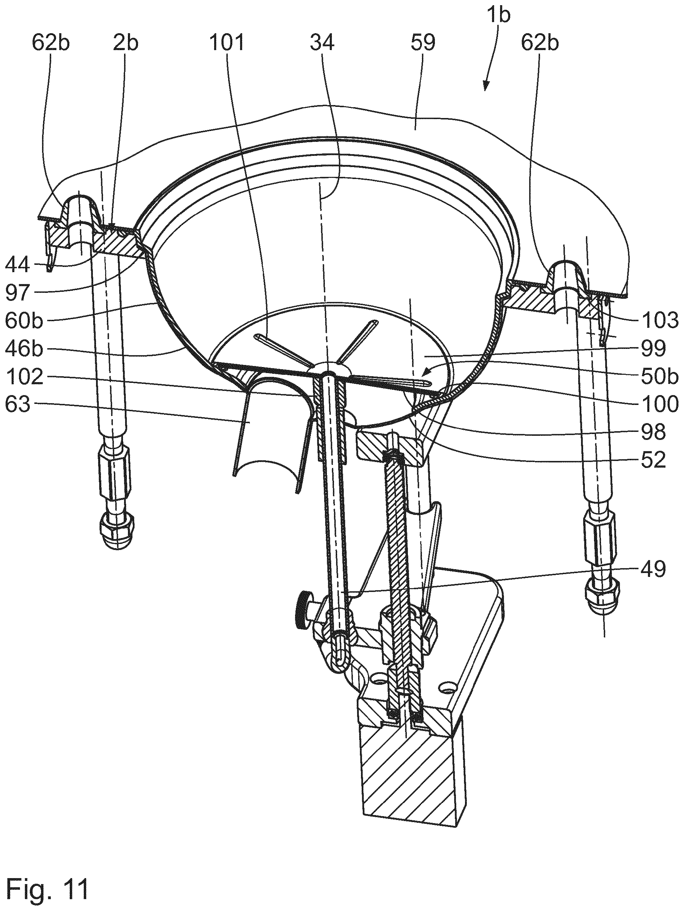

Im Folgenden wird unter Bezugnahme auf die Fig. 11 ein drittes Ausführungsbeispiel der Erfindung beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Aus Gründen der übersichtlicheren Darstellung ist die Vorrichtung 1b gemäß dem dritten Ausführungsbeispiel in Fig. 11 lediglich in Ausschnitten dargestellt. Sofern Komponenten nicht dargestellt oder nicht erläutert sind, entsprechen diese bzw. deren Funktion den Komponenten der beiden ersten Ausführungsbeispiele.

Ein wesentlicher Unterschied gegenüber den beiden ersten Ausführungsbeispielen besteht darin, dass die Vorrichtung 1b anstelle einer Silikon-Ringdichtung eine Silikon-Dichtung 60b aufweist, die die Unterschale 46b im Wesentlichen komplett abdichtet. Im Wesentlichen komplett bedeutet, dass die Unterschale 46b insbesondere in dem Bereich, in dem das Speisen-Gefäß 3 anzuordnen ist, abgedichtet ist. Die Silikon-Dichtung 60b ist in ihrer Form der Innenkontur der Unterschale 46b angepasst. Insbesondere liegt die Silikon-Dichtung 60b an der Innenfläche der Unterschale 46b an. Die Silikon-Dichtung 60b ist topfförmig ausgeführt und weist eine räumlich gestaltete Geometrie auf. Die Silikon-Dichtungen 62b für die Kugelrollspindelantriebe 43 zum Abdichten an der Tischplatte und an der Halterungsplatte 44 sind gemäß dem gezeigten Ausführungsbeispiel kegelstumpfförmig ausgeführt und ragen insbesondere an der Tischplatte 59 über. Die Silikon-Dichtungen 62b sind zwischen der Tischplatte 59 und der Halterungsplatte 44 mittels eines unteren Flanschabschnittes 103 geklemmt. Es ist insbesondere möglich, die Silikon-Dichtung 60b und die beiden Silikon-Dichtungen 62b einstückig herzustellen. Die Anzahl der Einzelteile ist dadurch reduziert. Die Montage der Vorrichtung ist dadurch vereinfacht.

Wie aus Fig. 11 hervorgeht, ist die Unterschale 46b unterhalb der Silikon-Dichtung 60b angeordnet. Lediglich in einem unteren Bereich der Unterschale 46b, insbesondere im Bereich des Unterschalen-Bodens 52 mit dem Abfluss 63 ist die Silikon-Dichtung 60b ausgespart. Gemäß dem gezeigten Ausführungsbeispiel ist die Unterschale 46b einstückig hergestellt. Insbesondere ist der Unterschalen-Boden 52 einteilig an die Unterschale 46b angeformt.

Die Unterschale 46b mit der darüber angeordneten Silikon-Dichtung 60b ermöglicht eine verbesserte Abdichtung der Unterschale 46b. Insbesondere ist eine Hygiene-Bedampfung der Vorrichtung 1b dadurch vereinfacht. Insbesondere ist es nicht erforderlich, dass besondere Dichtheitserfordernisse an die Unterschale 46b selbst gestellt werden müssen. Die Silikon-Dichtung 60b kann einstückig hergestellt sein. Insbesondere kann die Unterschale 46b unkompliziert und direkt in die dafür vorgesehene Öffnung in der Halterungs-Platte 44 eingesetzt werden. Dafür ist eine kegelstumpfförmige Auflage 97 an der Gefäß-Halterung 2b vorgesehen.

Ein weiterer Unterschied des dritten Ausführungsbeispiels besteht darin, dass der Aushebe-Teller 50b zweiteilig ausgeführt ist. Der Aushebe-Teller 50b umfasst einen Teller-Kern 98. Der Teller-Kern 98 ist gemäß dem gezeigten Ausführungsbeispiel aus rostfreiem Stahl, insbesondere Edelstahl, insbesondere V2A hergestellt. Der Teller-Kern 98 verleiht dem Aushebe-Teller 50b die erforderliche Festigkeit. An einer Unterseite des Teller-Kerns 98 ist eine Naben-Hülse 102 befestigt, insbesondere angeschweißt durch Punktschweißen. Mit der Naben-Hülse 102 ist der Aushebe-Teller 50b auf die Aushebe-Stange 49, die als Rohr ausgeführt ist, aufgesetzt. Der Teller-Kern 98 weist eine zentrale, konzentrisch zur Längsachse 34 angeordnete Öffnung auf, um eine Reinigungsbedampfung über die Aushebe-Stange 49 in der Unterschale 46b zu ermöglichen. Weiterhin umfasst der Aushebe-Teller 50b eine Silikon-Auflage 99, die auf den Teller-Kern 98 aufgesetzt ist. Dazu weist die Silikon-Auflage 99 eine radial umlaufende Ring-Nut 100 auf. Im Bereich der Ring-Nut 100 umgreift die Silikon-Auflage 99 den Teller-Kern 98. Dadurch ist gewährleistet, dass die Silikon-Auflage 99 zuverlässig an dem Teller-Kern 98 befestigt ist. Durch eine Axial-Verlagerung des Aushebe-Tellers 50b entlang der Längsachse 34 nach unten in Richtung der Aushebe-Stange 49 wird die Silikon-Auflage 99 im Bereich der Ring-Nut 100 gegen die Silikon-Dichtung 60b gedrückt. Während einer derartigen Hygienebedampfung wird Dampf unter Druck über die nicht dargestellte Sonde 9 von oben in die Unterschale 46b zugeführt. Dieser erhöhte Innendruck in der Unterschale 46b wirkt auf den Aushebe-Teller 50b und bewirkt, dass der Aushebe-Teller 50b zusätzlich zu der aktiven Axial-Verlagerung infolge des Innendrucks nach unten gegen die Silikon-Dichtung 60b gedrückt wird. Die Abdichtfunktion ist zusätzlich verbessert. Durch das Anliegen der beiden Silikon-Bauteile 50b, 60b ist ein zuverlässiges Abdichten des Aushebe-Tellers 50b an der Silikon-Dichtung 60b möglich.

Gemäß dem gezeigten Ausführungsbeispiel weist die Silikon-Auflage 99 fünf bezogen auf die Längsachse 34 in Umfangsrichtung gleichmäßig beabstandete Ablauf-Rillen 101 auf. Die Ablauf-Rillen 101 erstrecken sich in radialer Richtung bezogen auf die Längsachse 34. Die Ablauf-Rillen 101 begünstigen ein Abfließen von Flüssigkeit aus der Gefäß-Halterung 2b.

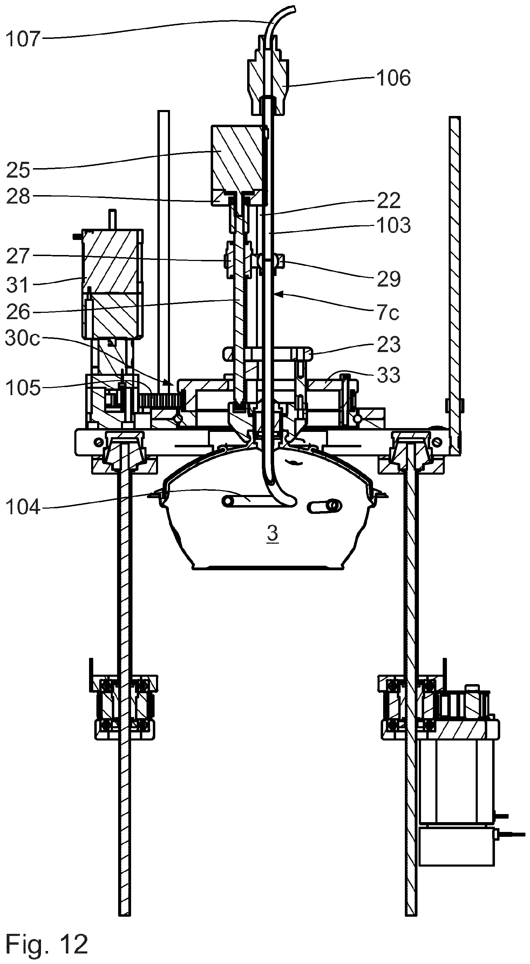

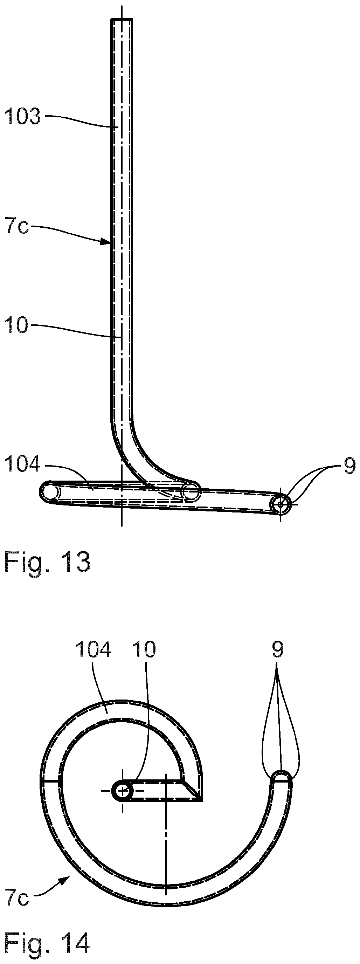

Im Folgenden wird unter Bezugnahme auf die Fig. 12 bis 14 ein viertes Ausführungsbeispiel der Erfindung beschrieben. Konstruktiv identische Teile halten dieselben Bezugszeichen wie bei den drei ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Der wesentliche Unterschied gegenüber den vorstehend beschriebenen Ausführungsbeispielen besteht darin, dass das Sondenrohr 7c abschnittsweise uneben ausgeführt ist. Das Sondenrohr weist einen linearen Hubabschnitt 103 und einen spiralförmig ausgeführten Erwärmungs-/Mischabschnitt 104 auf. Der Erwärmungs-/Mischabschnitt 104 ist derart ausgeführt, dass sich radial von dem Hubabschnitt 103 ein Radialstück erstreckt. Dem Radialstück schließt sich ein Tangentialstück an, das sich bezogen auf einen Umfangswinkel von 360° bezogen auf die Sondenrohr-längsachse 10 mit zunehmendem Öffnungsradius erstreckt. Der Umfangswinkel kann auch größer oder kleiner als 360° sein. Das bedeutet, dass sich das Tangentialstück beispielsweise entlang einer halben Umdrehung um das Sondenrohr 7c oder um mehr als eine Umdrehung, insbesondere eine eineinhalb fache Umdrehung erstreckt. Entlang des Tangentialstücks ist ein Höhenversatz entlang der Sondenrohr-Längsachse 10 vorgesehen. In Folge des Höhenversatzes ist das freie Ende des Tangentialstücks von dem Hubabschnitt 103 weiter beabstandet als das Ende des Tangentialstücks, das mit dem Radialstück verbunden ist. Der Höhenversatz beträgt gemäß dem gezeigten Ausführungsbeispiel etwa dem Rohrdurchmesser des Sondenrohrs 7c. Der Höhenversatz kann auch größer oder kleiner dem Durchmesser des Sondenrohrs 7c gewählt sein.

Am Ende des Sondenrohrs 7c, insbesondere an dem freien Ende des Tangentialstücks, sind drei Öffnungen 9 vorgesehen, wobei gemäß dem gezeigten Ausführungsbeispiel eine zentrale Öffnung 9 in tangentialer Richtung der Spiralform des Erwärmungs-/Mischabschnitts 104 orientiert ist. Jeweils in radialer Richtung bezogen auf die Sondenrohr-Längsachse 10, einmal der Sondenrohr-Längsachse 10 zugewandt und einmal der Sondenrohr-Längsachse 10 abgewandt, sind Sondenrohr-Öffnungen 9 angeordnet. Durch die Sondenrohr-Öffnungen 9 wird Dampf den Speisen zugeführt. Aufgrund der unterschiedlichen Austritts-Öffnungen des zugeführten Dampfes ist eine ausreichende Durchmischung der Speisen gewährleistet.

Gemäß dem gezeigten Ausführungsbeispiel ist der Rührantrieb 30c derart ausgeführt, dass über den Zahnriemen 105 die Drehbewegung des Drehantriebs 31 drehfest verbunden ist. Die Übertragung der Drehbewegung von dem Drehantrieb 31 auf den Rührantrieb 30c erfolgt insbesondere dadurch, dass die Führungsscheibe 33 drehfest mit den kurzen Stangen 22 der Sondenrohr-Führung verbunden sind. Dazu ist insbesondere ein Sondenmitnehmer vorgesehen, der beispielsweise auf einer oberen, dem Elektromotor 25 zugewandten Stirnseite der Führungsscheibe 23 angeordnet und insbesondere dort verschraubt ist. Der Sondenrohrmitnehmer kann als exzentrisch zur Sondenrohr-Längsachse 10 ein angeordneter Quersteg ausgeführt sein, der die beiden kurzen Rohre 22 umgreift. Der Zahnriemen 105 greift an der Führungsscheibe 33 an. Die Führungsscheibe 33 ist im Wesentlichen zylindrisch ausgeführt. Die Drehachse der Führungsscheibe 33, um die die Drehscheibe gedreht wird, ist koaxial zur Sondenrohr-Längsachse 10 orientiert.

Über die Sondenrohr-Halterung 29 ist das Sondenrohr 7c drehfest mit der Spindelnut 27 verbunden. Mittels des Elektromotors 25 und dem Zusammenwirken von Spindelnut 27 und Gewindespindel 26 erfolgt eine Hubbewegung entlang der Spindel-Längsachse 10. Durch einen Drehantrieb über Elektromotor 31, Zahnriemen 105 und Führungs-Scheibe 33 auf die Abstütz-Scheibe 23 und die Gewindespindel 26 erfolgt eine Drehbewegung des Sondenrohrs 7c um die Sondenrohr-Längsachse 10.

Insbesondere erfolgt die Drehbewegung des Sondenrohrs 7c entlang eines Umfangswinkels von 180°, also eine halbe Umdrehung um die Sondenrohr-Längsachse 10. Es sind auch größere oder kleinere Drehwinkel denkbar. Die Rührfunktion der Rühr-/Erwärmungseinheit 6 ist dadurch vereinfacht. Diese Drehbewegung wird gleichermaßen von dem Elektromotor 25 und den damit gekoppelten Komponenten ausgeführt. Diese Drehbewegung ist für die Funktionalität des Hubantriebs unproblematisch.

An einem oberen, dem Gefäß 3 abgewandten Ende ist das Sondenrohr 7c mittels einer Rotationskupplung 106 mit dem Schlauch 107 für die Dampfzuführung verbunden. Der Schlauch 107 ist in der Fig. 12 aus darstellerischen Gründen lediglich angedeutet. Wesentlich ist, dass die Rotationskupplung 106 die Drehbewegung des Sondenrohrs 7c gegenüber dem Schlauch 107 entkoppelt. Der Schlauch ist mechanisch entlastet. Der Schlauch 107 folgt lediglich der axialen Hubbewegung des Sondenrohrs 7c.

Gegenüber den vorherigen Ausführungsbeispielen ist das Sondenrohr 7c verkürzt. Dadurch ist die für die Einfahr- und Ausfahrbewegung der Sonde 7c in die bzw. aus den Speisen erforderliche Hubhöhe reduziert. Insbesondere beträgt die Dauer für das Eintauchen, Erhitzen und Durchmischen sowie das Ausfahren der Sonde 7c aus den zu erwärmenden Speisen höchstens 20 Sekunden.

Beim Einfahren der Sonde 7c in eine zu mischende und zu erwärmende Speise wird das Sondenrohr 7c abgesenkt, in dem die Spindelnut 27 entlang der Gewindespindel 26 axial nach unten, in Richtung des Gefäßes 3, verlagert wird. Gleichzeitig erfolgt ein Drehantrieb über den Elektromotor 31, den Zahnriemen 105 und die Führungs-Scheibe 33. Dadurch wird der Elektromotor 25 mit den daran gekoppelten Komponenten, insbesondere dem Getriebe 28, der Gewindespindel 26, der Spindelnut 27, der Sondenrohr-Halterung 29, um die Sondenrohr-Längsachse 10 gedreht. Dadurch, dass das Sondenrohr 7c in der Sondenrohr-Halterung 29 drehfest aufgenommen ist, wird auch das Sondenrohr 7c um die Sondenrohr-Längsachse 10 gedreht. Durch die Überlagerung von Hubbewegung und Drehbewegung wird das Sondenrohr mit dem Erwärmungs-/Mischabschnitt 104 in die zu durchmischenden Speisen entlang einer Einführ-Drehbewegung eingedreht bzw. eingeschraubt. Gleichzeitig erfolgt eine Dampfzugabe über die Öffnungen 9. Wesentlich ist, dass die Drehrichtung während des Eintauchens des Sondenrohrs 7c in die zu erwärmenden Speisen entgegengesetzt der Ausfahrbewegung gerichtet ist. Bei einer Energiezuführung über Schleifkontakte kann die Ausfahrbewegung der Einfahrbewegung auch gleichgerichtet sein. Insbesondere aufgrund des Erwärmungs-/Mischabschnitts 104 weist das Sondenrohr 7c eine verbesserte Durchmischung und insbesondere eine mechanische Schaufelwirkung auf.

Das Sondenrohr 7c und insbesondere der innerhalb des Gefäßes 3 angeordnete Erwärmungs-/Mischabschnitt 104 kann mit einer haftungsabweisenden Schutzbeschichtung ausgeführt sein. Insbesondere kann eine Teflonschicht an dem Sondenrohr 7c in dem Erwärmungs-/Mischabschnitt 104 vorgesehen sein. Dadurch kann vermieden werden, dass Speisereste an dem Sondenrohr 7c anhaften und zu ungewünschten Verunreinigungen führen.

Eine Überlagerung der Linearverlagerung des Sondenrohrs 7c mit der Drehbewegung um die Sondenrohr-Längsachse 10 bewirkt, dass die Durchmischung der Speisen, insbesondere von Nudeln und Soße, während des Erhitzens mit Dampf verbessert ist. Insbesondere ist die Drehbewegung derart festgelegt, dass das freie Ende des Sondenrohrs 7c sich auf einer Kreisbahn nahe des Bodens des Speisen-Gefäßes 3 bewegt. Die Drehbewegung des Sondenrohrs 7c beim Eintauchen in die Speisen ist festgelegt. Es kann im Uhrzeigersinn oder im Gegenuhrzeigersinn um die Sondenrohr-Längsachse 10 erfolgen. Die Drehbewegung entspricht einer Einschraubbewegung. Die zu vermischenden Speisen werden nach oben, also entgegen der Eintauchbewegung des Sondenrohrs 7c verdrängt. Beim Ausheben des Sondenrohrs 7c erfolgt die Drehbewegung entgegen der Eintauchdrehbewegung. Möglicherweise an dem Sondenrohr 7c anhaftende Speisenreste werden zuverlässig abgestreift.

## Patentansprüche

1. Vorrichtung zum Zubereiten von Speisen, umfassend eine Gefäß-Abdeckung (4) zum Abdecken eines Speisen-Gefäßes (3), und eine Rühr-/Erwärmungs-Einheit (6) zum Rühren und Erwärmen der Speisen in dem Speisen-Gefäß (3), wobei die Rühr-/Erwärmungs-Einheit (6) umfasst
i. ein mit mindestens einer Sondenrohr-Öffnung (9) innerhalb des Speisen-Gefäßes (3) anordenbares Sondenrohr (7),
ii. einen Rührantrieb (30) für eine Rührbewegung des Sondenrohrs (7),
wobei das Sondenrohr (7) so ausgebildet ist, dass es mit einem Dampferzeuger verbindbar ist, um den Speisen in dem Speisen-Gefäß (3) über die mindestens eine Sondenrohr-Öffnung (9) erwärmten Dampf zum Rühren und Erwärmen zuzuführen,
**gekennzeichnet durch,**
eine Gefäß-Halterung (2) zum Halten des Speisen-Gefäßes (3), in dem die Speisen zubereitet werden, und einen Sondenrohr-Linearantrieb (21) für eine Linearverlagerung des Sondenrohrs (7) entlang der Sondenrohr-Längsachse (10) relativ zu dem Speisen-Gefäß (3).

2. Vorrichtung gemäß Anspruch 1, **dadurch gekennzeichnet, dass** die Rühr-/Erwärmungs-Einheit (6) eine Schwenkaufnahme (20)aufweist, mit der das Sondenrohr (7) schwenkbar an der Gefäß-Abdeckung (4) angelenkt ist.

3. Vorrichtung gemäß Anspruch 2, **dadurch gekennzeichnet, dass** der Schwenkaufnahme (20) ein Rührbewegungs-Fixpunkt (41) zugeordnet ist, wobei der Rührbewegungs-Fixpunkt (41) insbesondere die Spitze eine virtuellen Kegelfläche ist, die durch die Rührbewegung von einer Sondenrohr-Längsachse (10) beschrieben wird.

4. Vorrichtung gemäß einem der vorstehenden Ansprüche, **dadurch gekennzeichnet, dass** der Rührantrieb (30) einen Drehantrieb (31) und ein von dem Drehantrieb (31) angetriebenes Führungs-Element (33) für eine geführte Drehbewegung des Sondenrohres (7) aufweist.

5. Vorrichtung gemäß Anspruch 4, **dadurch gekennzeichnet, dass** das Führungs-Element eine parallel zu einer Gefäß-Halterungs-Ebene angeordnete Führungs-Scheibe (33) mit einer exzentrisch angeordneten Durchtritts-Öffnung (35) aufweist.

6. Vorrichtung gemäß Anspruch 4 oder 5, **gekennzeichnet durch** eine senkrecht zur Sondenrohr-Längsachse (10) orientierte Abstütz-Scheibe (23) zum Abstützen, insbesondere des Eigengewichts, des Sondenrohrs (7) an der Führungs-Scheibe (33), wobei die Abstütz-Scheibe (23) an einem Kontaktpunkt an der Führungs-Scheibe (33) anliegt.

7. Vorrichtung gemäß einem der Ansprüche 4 bis 6, **dadurch gekennzeichnet, dass** das Führungs-Element (33), insbesondere die Führungs-Scheibe (33), Teil eines Innenrings (38) einer Lagerungs-Verbindung (37) ist.

8. Vorrichtung gemäß einem der Ansprüche 4 bis 7, **gekennzeichnet durch** eine Linearverlagerungs-Einheit (42) für eine Linearverlagerung des Führungs-Elements (33) relativ zu der Gefäß-Halterung (2) parallel zur Gefäß-Halterungs-Ebene.

9. Vorrichtung gemäß einem der vorstehenden Ansprüche, **dadurch gekennzeichnet, dass** das Sondenrohr (7) durch die Gefäß-Abdeckung (4) aus dem Speisen-Gefäß (3) abgedichtet herausgeführt ist.

10. Vorrichtung gemäß einem der vorstehenden Ansprüche, **dadurch gekennzeichnet, dass** die Gefäß-Abdeckung (4) eine Gefäß-Innenhaube (11), insbesondere aus Silikon, und eine mit der Gefäß-Innenhaube (11) verbundene Gefäß-Außenhaube (12), insbesondere aus Metall, insbesondere aus Edelstahl, aufweist.

11. Vorrichtung gemäß Anspruch 10, **dadurch gekennzeichnet, dass** die Gefäß-Außenhaube (12) formschlüssig mit der Gefäß-Innenhaube (11) rastend verbunden ist.

12. Vorrichtung gemäß einem der vorstehenden Ansprüche, **dadurch gekennzeichnet, dass** die Gefäß-Halterung (4) eine eine Aufnahme (45) aufweisende Halterungs-Platte (44) und eine in die Aufnahme (45) einsetzbare Unterschale (46) umfasst, wobei das Speisen-Gefäß (3) in die Unterschale (46) eingesetzt werden kann.

13. Vorrichtung gemäß Anspruch 12, **gekennzeichnet durch** eine, insbesondere hohl ausgeführte, Aushebe-Vorrichtung (47) zum Ausheben des Speisen-Gefäßes (3) aus der Unterschale (46).

14. Vorrichtung gemäß einem der vorstehenden Ansprüche, **dadurch gekennzeichnet, dass** das Sondenrohr (7) einen an einem im Speisen-Gefäß (3) anordenbaren Ende einen Düsen-Abschnitt aufweist, in dem mehrere Sondenrohr-Öffnungen (9) vorgesehen sind, wobei der Düsen-Abschnitt insbesondere kugelkalottenförmig ausgeführt ist.

## Claims

1. Device for preparing food, the device comprising a container cover (4) for covering a food container (3) and a stirring/heating unit (6) for stirring and heating the food in the food container (3), wherein the stirring/heating unit (6) comprises
i. a probe tube (7) arrangeable with at least one probe tube opening (9) inside the food container (3),
ii. a stirring drive (30) for a stirring movement of the probe tube (7), wherein the probe tube (7) is configured such that it is connectable to a steam generator to supply heated steam for stirring and heating the food in the food container (3) via the at least one probe tube opening (9),
**characterized by**
a container retainer (2) for retaining the food container (3) in which the food is prepared,
and
a probe tube linear drive (21) for a linear displacement of the probe tube (7) along the probe tube longitudinal axis (10) relative to the food container (3).

2. Device according to claim 1, **characterized in that** the stirring/heating unit (6) has a pivot receiver (20) by means of which the probe tube (7) is pivotably articulated to the container cover (4).

3. Device according to claim 2, **characterized in that** the pivot receiver (20) is associated to a stirring movement fixed point (41), wherein the stirring movement fixed point (41) is in particular the tip of a virtual conical surface that is described by the probe tube longitudinal axis (10) during the stirring movement.

4. Device according to any one of the preceding claims, **characterized in that** the stirring drive (30) has a rotary drive (31) and a guide element (33) driven by the rotary drive (30) for a guided rotary movement of the probe tube (7).

5. Device according to claim 4, **characterized in that** the guide element has a guide disk (33) with a through-opening (35) arranged eccentrically, said guide disk (33) being arranged parallel to a container retainer plane.

6. Device according to claim 4 or 5, **characterized by** a support disk (23) oriented perpendicular to the probe tube longitudinal axis (10) for supporting the probe tube, in particular the own weight thereof, on the guide disk (33), wherein the support disk (23) abuts against the guide disk (33) in a contact point.

7. Device according to any one of claims 4 to 6, **characterized in that** the guide element (33), in particular the guide disk (33), is part of an internal ring (38) of a bearing connector (37).

8. Device according to any one of claims 4 to 7, **characterized by** a linear displacement unit (42) for a linear displacement of the guide element (33) relative to the container retainer (2) in a direction parallel to the container retainer plane.

9. Device according to any one of the preceding claims, **characterized in that** the probe tube (7) is guided through the container cover (4) and out of the food container (3) in sealed manner.

10. Device according to any one of the preceding claims, **characterized in that** the container cover (4) has a container internal hood (11), in particular made of silicon, and a container external hood (12), in particular made of metal, in particular made of stainless steel, the container external hood (12) being connected to the container internal hood (11).

11. Device according to claim 10, **characterized in that** the container external hood (12) is positively connected to the container internal hood (11) in a snap-locking manner.

12. Device according to any one of the preceding claims, **characterized in that** the container retainer (4) comprises a retaining plate (44) with a receptacle (45) and a sub-container (46) insertable into the receptacle (45), wherein the food container (3) is insertable into the sub-container (46).

13. Device according to claim 12, **characterized by** a removing device (47), which is in particular hollow, for removing the food container (3) from the sub-container (46).

14. Device according to any one of the preceding claims, **characterized in that** the probe tube (7) has a nozzle portion at an end that is arrangeable in the food container (3), said nozzle portion being provided with a plurality of probe tube openings (9), wherein the nozzle portion is in particular configured in the shape of a spherical cap.

## Revendications

1. Dispositif pour la préparation de d'aliments, comprenant un couvercle de récipient (4) pour recouvrir un récipient pour aliments (3), et un ensemble agitateur/réchauffeur (6) pour l'agitation et le réchauffage des aliments dans le récipient pour aliments (3), dans lequel l'ensemble agitateur/réchauffeur (6) comprend
i. un tube de sonde (7) pouvant être disposé, par l'intermédiaire d'au moins une ouverture de tube de sonde (9), à l'intérieur du récipient pour aliments (3),
ii. un entrainement d'agitateur (30) pour un mouvement d'agitation du tube de sonde (7),
dans lequel le tube de sonde (7) est conçu de manière à pouvoir être raccordé à un générateur de vapeur, afin d'amener aux aliments, dans le récipient pour aliments (3), la vapeur réchauffée par ladite au moins une ouverture de tube de sonde (9), pour l'agitation et le réchauffage,
**caractérisé par**
un élément de retenue de récipient (2) destiné à retenir le récipient pour aliments (3) dans lequel les aliments sont préparés,
et
un entraînement linéaire de tube de sonde (21) pour un déplacement linéaire du tube de sonde (7) le long de l'axe longitudinal de tube de sonde (10) par rapport au récipient pour aliments (3).

2. Dispositif selon la revendication 1, **caractérisé en ce que** l'ensemble agitateur/réchauffeur (6) comprend un logement pivotant (20) au moyen duquel le tube de sonde (7) est articulé de manière pivotante sur le couvercle de récipient (4).

3. Dispositif selon la revendication 2, **caractérisé en ce qu'**un point fixe de mouvement d'agitation (41) est associé au logement pivotant (20), dans lequel le point fixe de mouvement d'agitation (41) est en particulier la pointe d'une surface conique virtuelle, qui est décrite par un axe longitudinal de tube de sonde (10) à la suite du mouvement d'agitation.

4. Dispositif selon l'une quelconque des revendications précédentes, **caractérisé en ce que** l'entrainement d'agitateur (30) comprend un entrainement de rotation (31) et un élément de guidage (33) entraîné par un entrainement de rotation (31) pour un mouvement rotatif guidé du tube de sonde (7).

5. Dispositif selon la revendication 4, **caractérisé en ce que** l'élément de guidage comprend un disque de guidage (33) qui est agencé parallèlement à un plan de retenue de récipient et qui est pourvu d'une ouverture de passage (35) ménagée de manière excentrique.

6. Dispositif selon la revendication 4 ou 5, **caractérisé par** un disque d'appui (23) orienté perpendiculairement à l'axe longitudinal de tube de sonde (10), destiné à soutenir en particulier le poids propre du tube de sonde (7) sur le disque de guidage (33), dans lequel le disque d'appui (23) s'applique au niveau d'un point de contact sur le disque de guidage (33).

7. Dispositif selon l'une quelconque des revendications 4 à 6, **caractérisé en ce que** l'élément de guidage (33), en particulier le disque de guidage (33), fait partie d'une bague intérieure (38) d'une liaison de montage (37).

8. Dispositif selon l'une quelconque des revendications 4 à 7, **caractérisé par** une unité de déplacement linéaire (42) pour un déplacement linéaire de l'élément de guidage (33) par rapport à l'élément de retenue de récipient (2) parallèlement au plan de retenue de récipient.

9. Dispositif selon l'une quelconque des revendications précédentes, **caractérisé en ce que** le tube de sonde (7) est guidé de manière étanchéifiée à l'extérieur du récipient pour aliments (3) en passant par le couvercle de récipient (4).

10. Dispositif selon l'une quelconque des revendications précédentes, **caractérisé en ce que** le couvercle de récipient (4) comprend un capot intérieur de récipient (11), en particulier en silicone, et un capot extérieur de récipient (12), en particulier en métal, en particulier en inox, relié au capot intérieur de récipient (11).

11. Dispositif selon la revendication 10, **caractérisé en ce que** le capot extérieur de récipient (12) est relié par encliquetage et par coopération de formes au capot intérieur de récipient (11).

12. Dispositif selon l'une quelconque des revendications précédentes, **caractérisé en ce que** l'élément de retenue de récipient (4) comprend une plaque de retenue (44) comportant un logement (45) et une coque inférieure (46) pouvant être insérée dans le logement (45), dans lequel le récipient pour aliments (3) peut être inséré dans la coque inférieure (46).

13. Dispositif selon la revendication 12, **caractérisé par** un dispositif de soulèvement (47), en particulier creux, destiné à soulever le récipient pour aliments (3) de la coque inférieure (46).

14. Dispositif selon l'une quelconque des revendications précédentes, **caractérisé en ce que** le tube de sonde (7) comprend à une extrémité pouvant être agencée dans le récipient pour aliments (3) une section de buse dans laquelle sont ménagées plusieurs ouvertures de tube de sonde (9), la section de buse étant en particulier en forme de calotte sphérique.
